# EUROPEAN PATENT SPECIFICATION

(11) **EP 4 083 932 B1**
(45) Date of publication and mention of the grant of the patent: **29.07.2026**
(21) Application number: 22739567.0
(22) Date of filing: 06.01.2022
(51) Int. Cl.: G06T 19/00, G06F 3/0481, G06F 3/0484, G06F 3/01, G06T 19/20, G06Q 30/02, G01C 21/36, B60K 35/00

(54) **DISPLAY DEVICE INTERWORKING WITH VEHICLE AND OPERATING METHOD THEREOF**
EINE MIT EINEM FAHRZEUG INTERAGIERENDE ANZEIGEVORRICHTUNG UND ZUGEHÖRIGES BETRIEBSVERFAHREN
DISPOSITIF D'AFFICHAGE EN INTERACTION AVEC UN VÉHICULE ET SON PROCÉDÉ DE FONCTIONNEMENT

(30) Priority: 12.01.2021 KR 20210004116
(43) Date of publication of application: 02.11.2022
(73) Proprietor: LG ELECTRONICS INC., Yeongdeungpo-gu Seoul 07336 (KR)
(72) Inventor: LEE, Jinsang, Seoul 06772 (KR); KIM, Sujin, Seoul 06772 (KR); KANG, Byoungsu, Seoul 06772 (KR); SON, Jinho, Seoul 06772 (KR)
(74) Representative: Vossius & Partner Patentanwälte Rechtsanwälte mbB
(86) International application number: PCT/KR2022/000206
(87) International publication number: WO 2022/154369

(56) References cited:
- EP-A1- 3 499 191
- WO-A1-2008/093983
- JP-A- 2017 126 142
- JP-A- 2019 164 001
- KR-A- 20190 078 676
- KR-B1- 101 331 827
- US-A1- 2012 113 138
- US-A1- 2016 121 723

## Description

### Technical Field

The present invention relates to a display device linked to a vehicle and an operating method thereof, and more particularly, to a display device linked to a vehicle and configured to communicate with a system to display augmented reality (AR) digital signage on a floor-by-floor basis in a building in a driving image of a vehicle floor and an operating method thereof.

### Background Art

For safety and convenience of a user who uses a vehicle, various sensors and devices are disposed at the vehicle, and functions of the vehicle are diversified. The functions of the vehicle may be divided into a convenience function for promoting driver's convenience, and a safety function for enhancing safety of the driver and/or pedestrians.

The convenience function of the vehicle has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function of the vehicle is a technique of ensuring safeties of the driver and/or pedestrians, and may include various functions, such as a lane departure warning system (LDWS), a lane keeping assist system (LKAS), an autonomous emergency braking (AEB), and the like.

Recently, a technology for augmented reality (AR) that outputs a graphic object through a vehicle's windshield or head-up display (HUD) or that outputs a graphic object to an image captured by a camera to additionally output the graphic object to the real world is being actively developed. In particular, by utilizing such AR technology, the development of technologies for guiding a route to a driver through AR technology or for exposing various additional information or advertisements related to points of interest (POI) existing on a route is expanding.

Meanwhile, various guidance or advertisements through AR technology are expressed in the form of AR objects over an actual driving image. Thus, there was a sense of separation from reality, and there were limitations in providing a variety of information at once.

Also, there is a limitation in that when various announcements or advertisements through augmented reality (AR) technology are displayed on a driving image as described above, a building's shape based on a driver's viewing angle, a vehicle driving situation, a driver's individual tendency, and nearby traffic and structural environments cannot be flexibly reflected.

Furthermore, there is another limitation in that once an announcement or advertisement using AR technology is displayed at a predetermined position (e.g., overlapping with or adjacent to an associated object), the display position cannot be varied according to the environment changing due to vehicle driving. Accordingly, there is a problem in that the visibility of an announcement or advertisement using AR technology is reduced.

US 2012/113138 A1 discloses displaying multiple images each containing information of a POI beside an image of a building, in which the POls are located. EP 3 499 191 A1 discloses a method of receiving a preset destination, receiving an image captured by a camera of a vehicle, identifying the preset destination from the image, and display, on a display unit, a graphic object superimposed on the preset destination in the image. WO 2008/093983 A1 discloses a method of adjusting transparency of a display screen when detecting an obstacle by a sensor of the vehicle.

### Disclosure of Invention

### Technical Problem

The present invention aims to solve the above and other problems.

An object of the present invention is to provide a vehicle display device capable of providing AR digital signage closely similar to a real signboard on a driving image of a vehicle and an operating method thereof.

Also, an object of the present invention is to provide a vehicle display device capable of providing not one piece of but a plurality of pieces of AR digital signage at positions corresponding to a plurality of points of interest (POls) on a floor-by-floor basis in a building including the POIs and an operating method thereof.

Also, an object of the present invention is to provide a vehicle display device capable of naturally and variably providing images of a plurality of pieces of AR digital signage by flexibly reflecting a building's shape based on a driver's viewing angle, a vehicle driving situation, a driver's personal tendency, and nearby traffic and structural environments.

Also, an object of the present invention is to provide a vehicle display device capable of changing an information type and a display position according to the environment changing due to vehicle driving or nearby obstacles even after a plurality of pieces of AR digital signage are displayed on a floor-by-floor basis in a building including a plurality of POIs and an operating method thereof.

An object of the present invention is to provide a vehicle navigation device capable of improving the visibility of a driver and helping the driver to drive safely while a vehicle is about to or is expected to enter a building including a plurality of points of interest (POls) and an operating method thereof.

### Solution to Problem

The present invention defined in the appended independent claims solves the above-identified problem. Preferred aspects of the present invention are defined by the appended dependent claims.

### Advantageous Effects of Invention

The advantages effects of the digital signage platform providing apparatus, the operating method thereof, and the system including the same according to the present invention are as follows.

According to some embodiments of the present invention, by mapping augmented reality (AR) signage to a building in a driving image and displaying the AR signage to be closely similar to a real signboard, it is possible to solve the awkwardness caused by artificially displaying an AR object on a driving route screen in a conventional manner.

According to some embodiments of the present invention, it is possible to solve the conventional limitation of displaying only one advertisement in one area even if augmented reality (AR) technology is used, and thus advantageously, it is possible to provide extensibility for providing a plurality of various advertisements to one building.

According to some embodiments of the present invention, even after the AR digital signage is mapped to the display area of the building on a floor-by-floor basis, it is possible to flexibly reflect the shape of a building based on a driver's view, a driving situation of a vehicle, preference, and nearby traffic and structural environments to vary the location of the display area. Accordingly, it is possible to enhance the visibility of the displayed AR digital signage.

According to some embodiments of the present invention, when conditions for a vehicle to enter a building area are satisfied, it is possible to significantly improve visibility by displaying AR digital signage on an AR carpet on a road differently from the conventional method of mapping and displaying AR digital signage on a building on a floor-by-floor basis.

According to some embodiments of the present invention, by mapping and displaying a plurality of pieces of AR digital signage and an AR carpet on a road in a driving image rather than on a building in order to secure the visibility of advertisement signage while a vehicle is about to or is expected to enter the building, it is possible to help safety driving because visual information is provided on a road ahead without the need for a driver to change his or her gaze to the building.

According to some embodiments of the present invention, when the appearance of an obstacle is detected in the driving direction of the vehicle, it is possible to enable a driver to reliably recognize the obstacle and drive safely by stopping the display of the AR carpet and moving and mapping the image of the floorwise AR digital signage to another display area in the driving video or increasing the transparency of the AR digital signage and mapping the AR digital signage.

### Brief Description of Drawings

FIG. 1 is a diagram illustrating an exemplary vehicle according to an implementation.
FIG. 2 is a diagram illustrating the vehicle according to the implementation at various angles.
FIGS. 3 and 4 are diagrams illustrating the interior of the vehicle.
FIGS. 5 and 6 are diagrams illustrating various objects related to driving (traveling) of the vehicle.
FIG. 7 is a block diagram illustrating the vehicle in accordance with the implementation.
FIG. 8 is a block diagram showing communication with a digital signage platform providing apparatus, a user terminal, and a cloud server.
FIG. 9 is a block diagram showing that an information processing system communicates with a plurality of user terminals.
FIG. 10 is a diagram illustrating a configuration of a digital signage platform providing apparatus.
FIG. 11 is a representative flowchart illustrating an operating method of a digital signage platform providing apparatus.
FIGS. 12 and 13 are diagrams illustrating a method of arranging AR digital signage in a building area of a driving image on a floor-by-floor basis.
FIG. 14 is a diagram illustrating a method of selecting a display area of floorwise augmented reality (AR) digital signage on the basis of the shape of a building area.
FIG. 15 is a diagram illustrating a method of selecting a display area of floorwise AR digital signage on the basis of vehicle driving information.
FIG. 16 is a diagram illustrating a method of mapping floorwise AR digital signage to an AR carpet rather than to a building.
FIG. 17 is a flowchart illustrating a method of mapping floorwise AR digital signage to an AR carpet in a diving image acquired through a vision sensor.
FIGS. 18, 19, 20, and 21 are diagrams illustrating that AR digital signage that has been displayed on a building on a floor-by-floor basis is mapped on an AR carpet of a road as a vehicle approaches a building area.
FIG. 22 is a diagram illustrating that AR digital signage corresponding to destination POI information is highlighted and mapped and displayed on an AR carpet.
FIGS. 23 and 24 are diagrams illustrating different methods of changing the display of an AR carpet and AR digital signage when an obstacle is on a road.
FIGS. 25 and 26 are diagrams illustrating a method of mapping and displaying related AR digital signage on an AR carpet that guides a lane change as the lane change is performed while the AR carpet is displayed,.
FIG. 27 is a diagram illustrating that a display device communicates with a vehicle and a digital signage platform providing system.

### Mode for the Invention

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present invention, if a detailed explanation for a related known function or construction is considered to unnecessarily divert the understanding of the present invention, such explanation has been omitted but would be understood by those skilled in the art. The accompanying drawings are used to help easily understand the present invention and it should be understood that the present invention is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle may be understood as a conception including cars, motorcycles and the like. Hereinafter, the vehicle will be described based on a car.

The vehicle may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

In the present disclosure, "system" may include at least one of a server apparatus and a cloud apparatus, but is not limited thereto. For example, the system may be composed of one or more server apparatuses. As another example, the system may be composed of one or more server apparatuses. As still another example, the system may be operated by configuring a server apparatus and a cloud apparatus.

In the present disclosure, a "user terminal" or "user client" may be referred to as including a computing device and/or system or a user of a user terminal capable of communicating with a vehicle (or a vehicular electronic device, apparatus, or system provided in a vehicle) and an AR digital signage platform providing apparatus or system.

In the present disclosure, a "digital signage platform" may provide an embedded, an apparatus-based, or a cloud-based platform capable of Platform as a Service (PaaS) and/or Machine Learning as a Service (MLaaS). This digital signage platform is related to a method or operation of providing AR digital signage.

In the present disclosure, "map information" may be referred to as including images captured by a vision sensor such as a camera, two-dimensional (2D) map information, three-dimensional (3D) map information, a digital-twin 3D map, and map information in real/virtual space.

In the present disclosure, "point of interest (POI) information" indicates a point of interest selected based on the map information and may include pre-registered POI information (POIs stored in a map of a cloud server), user-set POI information (e.g., home, school, company, etc.), driving-related POI information (e.g., destination, stopover, gas station, rest area, parking lot, etc.). Such POI information may be updated based on the current location of the vehicle in real time.

In the present disclosure, "driving image" is obtained through a vision sensor of or near a vehicle and, for example, may include an image acquired or projected through a vision sensor (a camera, a laser sensor for images, etc.) during the driving of the vehicle and a real image or a virtual space image projected onto the vehicle's windshield. That is, the driving image may be referred to as including an image output through a display, an image projected through a laser sensor, or a real image seen through a vehicle windshield.

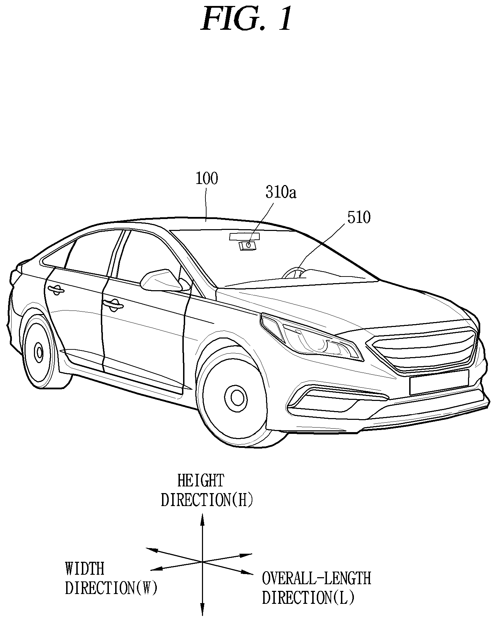

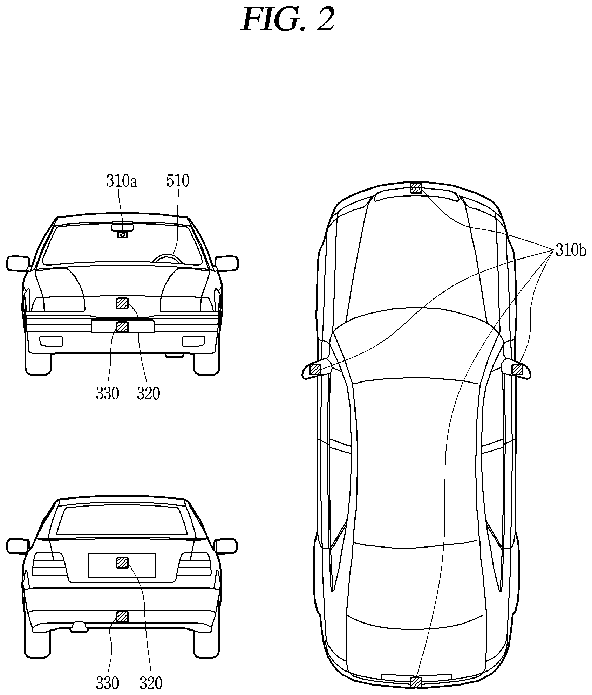

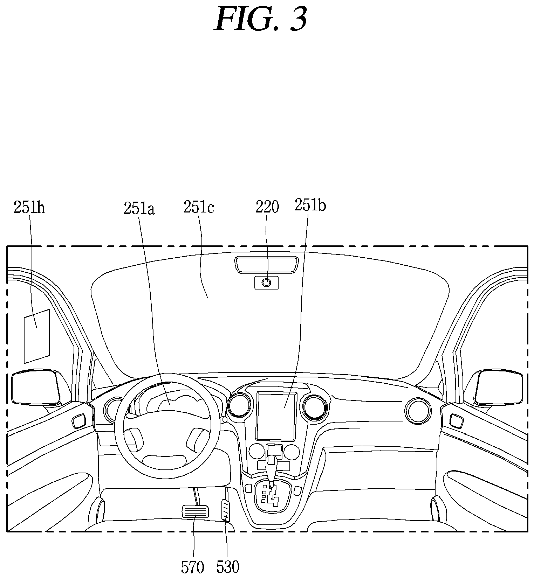

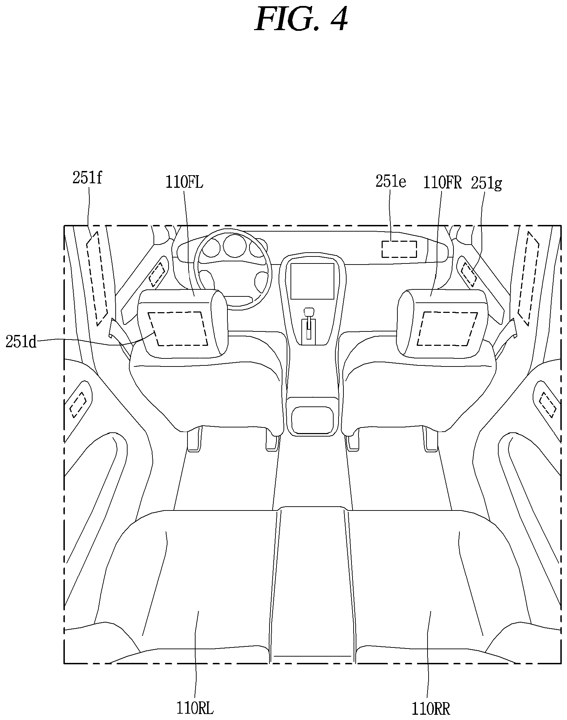

FIGS. 1 and 2 illustrate the exterior of a vehicle according to an implementation and FIGS. 3 and 4 illustrate the interior of the vehicle.

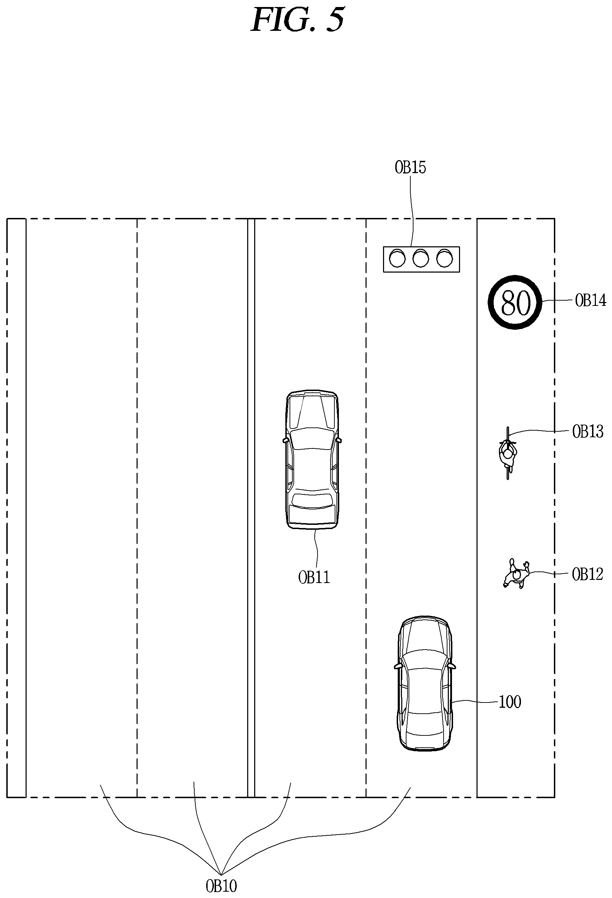

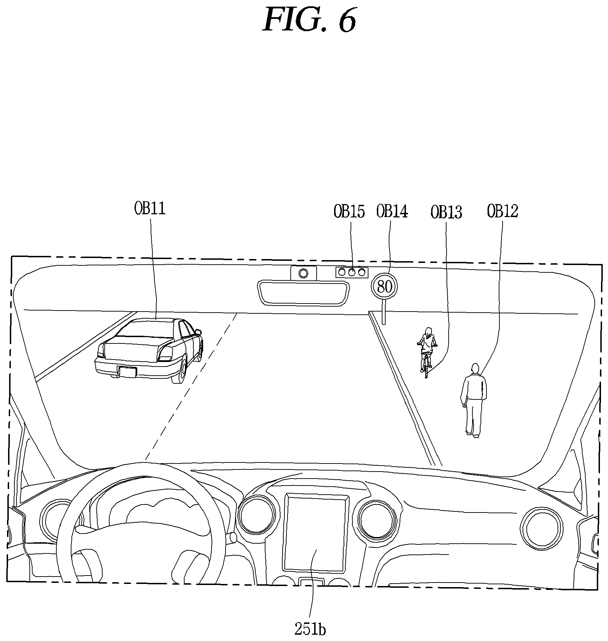

FIGS. 5 and 6 are diagrams illustrating various objects related to driving (traveling) of the vehicle.

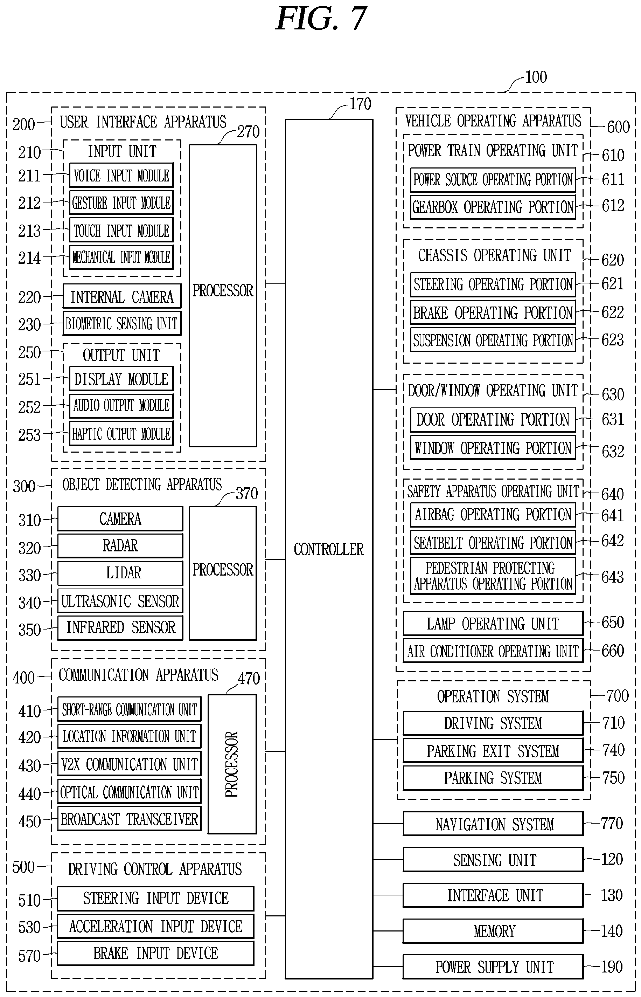

FIG. 7 is a block diagram illustrating the vehicle in accordance with the implementation. FIG. 7 is a block diagram illustrating the vehicle according to the implementation.

As illustrated in FIG. 1 to 7, a vehicle 100 may include wheels turning by a driving force, and a steering input device 510 for adjusting a driving (traveling, ongoing, moving) direction of the vehicle 100.

The vehicle 100 may be an autonomous vehicle. The vehicle 100 may be switched into an autonomous mode or a manual mode based on a user input. For example, the vehicle may be switched from the manual mode into the autonomous mode or from the autonomous mode into the manual mode based on a user input received through a user interface apparatus (hereinafter, referred to as 'user terminal') 200.

The vehicle 100 may be switched into the autonomous mode or the manual mode based on driving environment information. The driving environment information may be generated based on object information provided from an object detecting apparatus 300. For example, the vehicle 100 may be switched from the manual mode into the autonomous mode or from the autonomous module into the manual mode based on driving environment information generated in the object detecting apparatus 300. In an example, the vehicle 100 may be switched from the manual mode into the autonomous mode or from the autonomous module into the manual mode based on driving environment information received through a communication apparatus 400.

The vehicle 100 may be switched from the manual mode into the autonomous mode or from the autonomous module into the manual mode based on information, data or signal provided from an external device.

When the vehicle 100 is driven in the autonomous mode, the autonomous vehicle 100 may be driven based on an operation system 700. For example, the autonomous vehicle 100 may be driven based on information, data or signal generated in a driving system 710, a parking exit system 740 and a parking system 750.

When the vehicle 100 is driven in the manual mode, the autonomous vehicle 100 may receive a user input for driving through a driving control apparatus 500. The vehicle 100 may be driven based on the user input received through the driving control apparatus 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 7, the vehicle 100 may include a user interface apparatus (hereinafter, referred to as 'user terminal') 200, an object detecting apparatus 300, a communication apparatus 400, a driving control apparatus 500, a vehicle operating apparatus 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface apparatus 200 is an apparatus for communication between the vehicle 100 and a user. The user interface apparatus 200 may receive a user input and provide information generated in the vehicle 100 to the user. The vehicle 100 may implement user interfaces (Uls) or user experiences (UXs) through the user interface apparatus (hereinafter, referred to as 'user terminal') 200.

The user interface apparatus 200 may include an input unit 210, an internal camera 220, a biometric sensing unit 230, an output unit 250 and at least one processor, such as processor 270. In some implementations, the user interface apparatus 200 may include more components in addition to components to be explained in this specification or may not include some of those components to be explained in this specification.

The input unit 210 may allow the user to input information. Data collected in the input unit 210 may be analyzed by the processor 270 and processed as a user's control command.

The input unit 210 may be disposed inside the vehicle. For example, the input unit 210 may be disposed on one area of a steering wheel, one area of an instrument panel, one area of a seat, one area of each pillar, one area of a door, one area of a center console, one area of a headlining, one area of a sun visor, one area of a wind shield, one area of a window or the like.

The input unit 210 may include a voice input module 211, a gesture input module 212, a touch input module 213, and a mechanical input module 214.

The audio input module 211 may convert a user's voice input into an electric signal. The converted electric signal may be provided to the processor 270 or the controller 170. The voice input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input. According to embodiments, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input. According to an embodiment, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170. The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing module 230 may include a sensor for detecting the user's biometric information and acquire fingerprint information and heart rate information regarding the user using the sensor. The biometric information may be used for user authentication.

The output unit 250 may generate an output related to a visual, audible or tactile signal. The output unit 250 may include at least one of a display module 251, an audio output module 252 and a haptic output module 253.

The display module 251 may output graphic objects corresponding to various types of information. The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window. The transparent display may have a predetermined degree of transparency and output a predetermined screen thereon. The transparent display may include at least one of a thin film electroluminescent (TFEL), a transparent OLED, a transparent LCD, a transmissive transparent display and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 may convert an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor (hereinafter, referred to as 'controller') 270 may control an overall operation of each unit of the user interface apparatus 200. In some implementations, the user interface apparatus 200 may include a plurality of processors 270 or may not include any processor 270.

When the processor 270 is not included in the user interface apparatus 200, the user interface apparatus 200 may operate according to a control of a processor of another apparatus within the vehicle 100 or the controller 170.

Meanwhile, the user interface apparatus 200 may be called as a display apparatus for vehicle. The user interface apparatus 200 may operate according to the control of the controller 170.

The object detecting apparatus 300 is an apparatus for detecting an object located at outside of the vehicle 100. The object may be a variety of objects associated with driving (operation) of the vehicle 100. Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may include left and right lines defining a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may be a concept including another vehicle and a pedestrian. The fixed object may be, for example, a traffic signal, a road, or a structure.

The object detecting apparatus 300 may include a camera 310, a radar 320, a LiDAR 330, an ultrasonic sensor 340, an infrared sensor 350, and a processor 370.

In some implementations, the object detecting apparatus 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detecting apparatus 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

In some implementations, the object detecting apparatus 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detecting apparatus 300, the object detecting apparatus 300 may operate according to the control of a processor of an apparatus within the vehicle 100 or the controller 170.

The object detecting apparatus 400 may operate according to the control of the controller 170.

The communication apparatus 400 is an apparatus for performing communication with an external device. Here, the external device may be another vehicle, a mobile terminal or a server.

The communication apparatus 400 may perform the communication by including at least one of a transmitting antenna, a receiving antenna, and radio frequency (RF) circuit and RF device for implementing various communication protocols.

The communication apparatus 400 may include a short-range communication unit 410, a location information unit 420, a V2X communication unit 430, an optical communication unit 440, a broadcast transceiver 450 and a processor 470.

According to an embodiment, the communication apparatus 400 may further include other components in addition to the components described, or may not include some of the components described.

The short-range communication unit 410 is a unit for facilitating short-range communications. Suitable technologies for implementing such short-range communications include BLUETOOTH, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit implementing a communication protocol with the infra (V2I), a communication protocol between the vehicles (V2V) and a communication protocol with a pedestrian (V2P).

The optical communication unit 440 is a unit for performing communication with an external device through the medium of light. The optical communication unit 440 may include a light-emitting diode for converting an electric signal into an optical signal and sending the optical signal to the exterior, and a photodiode for converting the received optical signal into an electric signal.

According to an embodiment, the light-emitting diode may be integrated with lamps provided on the vehicle 100.

The broadcast transceiver 450 is a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal and a data broadcast signal.

The processor 470 may control an overall operation of each unit of the communication apparatus 400.

According to an embodiment, the communication apparatus 400 may include a plurality of processors 470 or may not include any processor 470.

When the processor 470 is not included in the communication apparatus 400, the communication apparatus 400 may operate according to the control of a processor of another device within the vehicle 100 or the controller 170.

Meanwhile, the communication apparatus 400 may implement a display apparatus for a vehicle together with the user interface apparatus 200. In this instance, the display apparatus for the vehicle may be referred to as a telematics apparatus or an Audio Video Navigation (AVN) apparatus.

The communication apparatus 400 may operate according to the control of the controller 170.

The driving control apparatus 500 is an apparatus for receiving a user input for driving.

In a manual mode, the vehicle 100 may be operated based on a signal provided by the driving control apparatus 500.

The driving control apparatus 500 may include a steering input device 510, an acceleration input device 530 and a brake input device 570.

The steering input device 510 may receive an input regarding a driving (ongoing) direction of the vehicle 100 from the user. The steering input device 510 may be configured in the form of a wheel allowing a steering input in a rotating manner. In some implementations, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad or a button.

The driving control apparatus 500 may operate according to the control of the controller 170.

The vehicle operating apparatus 600 is an apparatus for electrically controlling operations of various devices within the vehicle 100.

The vehicle operating apparatus 600 may include a power train operating unit 610, a chassis operating unit 620, a door/window operating unit 630, a safety apparatus operating unit 640, a lamp operating unit 650, and an air-conditioner operating unit 660.

According to some embodiments, the vehicle operating apparatus 600 may further include other components in addition to the components described, or may not include some of the components described.

In some examples, the vehicle operating apparatus 600 may include a processor. Each unit of the vehicle operating apparatus 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox. The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device. The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road. Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protecting apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protecting apparatus operating portion 643 may perform an electronic control for a hood lift and a pedestrian airbag. For example, the pedestrian protecting apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operating apparatus 600 may include a processor. Each unit of the vehicle operating apparatus 600 may individually include a processor.

The vehicle operating apparatus 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

According to embodiments, the operation system 700 may further include other components in addition to components to be described, or may not include some of the components to be described.

In some examples, the operation system 700 may include at least one processor. Each unit of the operation system 700 may individually include a processor.

In some implementations, the operation system may be implemented by the controller 170 when it is implemented in a software configuration.

In some implementations, the operation system 700 may be implemented by at least one of the user interface apparatus 200, the object detecting apparatus 300, the communication apparatus 400, the vehicle operating apparatus 600 and the controller 170.

The driving system 710 may perform driving of the vehicle 100.

The driving system 710 may receive navigation information from a navigation system 770, transmit a control signal to the vehicle operating apparatus 600, and perform driving of the vehicle 100. The driving system 710 may receive object information from the object detecting apparatus 300, transmit a control signal to the vehicle operating apparatus 600 and perform driving of the vehicle 100. The driving system 710 may receive a signal from an external device through the communication apparatus 400, transmit a control signal to the vehicle operating apparatus 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot. The parking exit system 740 may receive object information from the object detecting apparatus 300, transmit a control signal to the vehicle operating apparatus 600 and perform the exit of the vehicle 100 from the parking lot. The parking exit system 740 may receive a signal from an external device through the communication apparatus 400, transmit a control signal to the vehicle operating apparatus 600, and perform the exit of the vehicle 100 from the parking lot.

The parking system 750 may perform parking of the vehicle 100.

The parking system 750 may receive navigation information from the navigation system 770, transmit a control signal to the vehicle operating apparatus 600, and park the vehicle 100. The parking system 750 may receive object information from the object detecting apparatus 300, transmit a control signal to the vehicle operating apparatus 600 and park the vehicle 100. The parking system 750 may receive a signal from an external device through the communication apparatus 400, transmit a control signal to the vehicle operating apparatus 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

According to embodiments, the navigation system 770 may update prestored information by receiving information from an external device through the communication apparatus 400.

In some implementations, the navigation system 770 may be classified as a sub component of the user interface apparatus 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

Meanwhile, the digital signage platform providing apparatus may communicate with a user interface device (or hereinafter referred to as "user terminal") 200 or a navigation system 770 of a vehicle 100 to provide a platform and/or related data for providing AR digital signage to a building in a driving image on a floor-by-floor basis.

In the present disclosure, AR digital signage refers to providing multimedia information displayed on a building or related area in a driving image using augmented reality (AR) technology and is obtained by implementing a function such as an outdoor signboard with AR technology.

As disclosed herein, the displaying of AR digital signage in a building in which a plurality of pieces of POI information are present on a floor-by-floor basis refers to determining floor number information matched to the POI information and displaying content information corresponding to each floor of the building on a floor-by-floor basis using AR digital signage when content information (e.g., advertisement information, brand information, news information, etc.) related to the plurality of pieces of POI information is present.

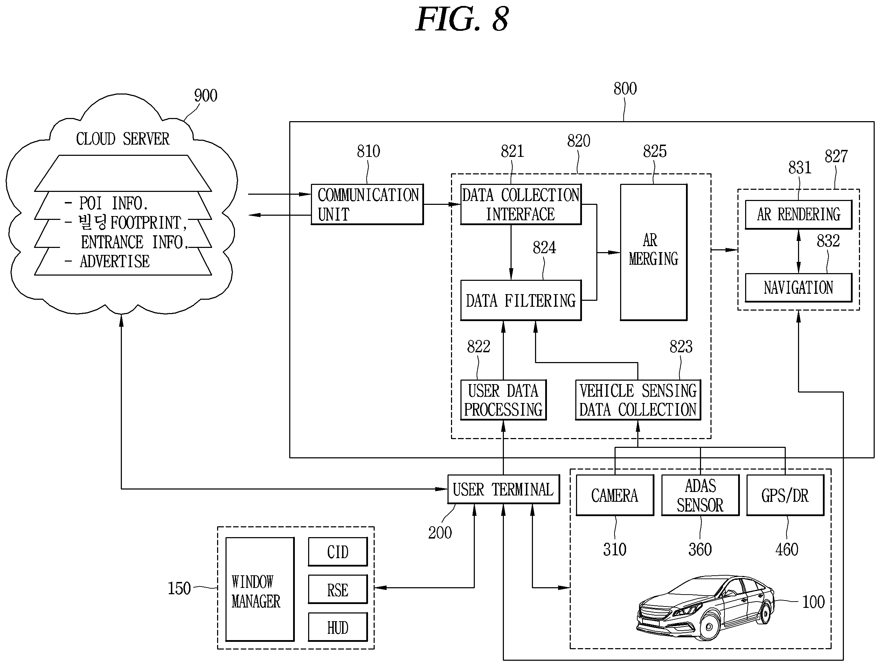

FIG. 8 is a block diagram showing that a digital signage platform providing apparatus 800 is communicatively connected to a user terminal 200, a vehicle 100, and a cloud server 900.

The digital signage platform providing apparatus 800 may be implemented as a portion of a vehicular electronic device or system of the vehicle 100 or may be included in the cloud server. Also, the digital signage platform providing apparatus 800 may be implemented in the form of a program implemented by a processor of the user terminal 200 linked with the vehicle 100.

The digital signage platform providing apparatus 800 may communicate with the vehicle 100 to collect sensing data through a sensor provided in the vehicle 100 and may collect and process user data through the user terminal 200 linked with the vehicle 100. The digital signage platform providing apparatus 800 may filter and process data collected in communication with the vehicle 100 and the user terminal 200 and information collected through the cloud server 900, perform AR merging, and make a rendering request to generate AR digital signage.

The digital signage platform providing apparatus 800 may transmit a result for the rendering request to the user terminal 200 and may request continuous image correction for performing mapping into a driving image displayed on a windshield, a dashboard, a head-up display (HUD), etc. through the user terminal 200. Here, the user terminal 200 may be implemented as a user interface device or a navigation system 770 implemented as a part of the system of the vehicle 100 as described above.

The digital signage platform providing apparatus 800 is communicatively connected to the cloud server 900 through the communication module 810. A plurality of cloud servers 900 may communicate with the digital signage platform providing apparatus 800.

The digital signage platform providing apparatus 800 may communicate with the cloud server 900 to receive map information such as 2D or 3D map information, building footprint information, entrance information, and floor number information including POI information.

Also, the digital signage platform providing apparatus 800 may communicate with the cloud server 900 to receive advertisement information about a POI (e.g., advertisement information collected in operative association with databases such as NoSQL DB, Mongo, etc. Also, the digital signage platform providing apparatus 800 may communicate with the cloud server 900 to receive real-time traffic information.

The digital signage platform providing apparatus 800 may collect and store the map information, advertisement information, and traffic information received from the cloud server 900 in a data collection interface 821. The collected and stored information is delivered for data filtering (824).

Also, the digital signage platform providing apparatus 800 receives vehicle sensing data from a camera 310, an advanced driver assistance systems (ADAS) sensor 360, and a global positioning system (GPS)/dead reckoning (DR) unit 460 provided in the vehicle 100 through a communication unit (not shown) or a user interface (not shown). Here, the vehicle sensing data may include, for example, a driving image acquired through the camera 310 provided in the vehicle, a driving direction and speed, a distance from a lane, and the like acquired through the ADAS sensor 360, and location data of the vehicle acquired through a vehicle navigation system such as the GPS/DR unit 460. The received vehicle sensing data is collected and stored through vehicle sensing data collection (823), and the stored information is delivered for the data filtering (824).

Also, the digital signage platform providing apparatus 800 may receive a request corresponding to a user input (e.g., a request for AR signage provision, a request for route guidance, etc.) from the user terminal 200 that is embedded in or linked with the vehicle 100. The received user input is processed through user data processing (822) and delivered for the data filtering (824).

In the data filtering (824) of the digital signage platform providing apparatus 800, information received from the cloud server 900, input information transmitted by the user terminal 200, and vehicle sensing data received from the vehicle 100 are filtered and processed so that only optimal data to be shown in a driving image remains.

Specifically, the digital signage platform providing apparatus 800 detects a building area including a plurality of pieces of POI information, calculates spatial coordinates of the building area, and acquires floor number information for each of the plurality of pieces of POI information on the basis of the map information received from the cloud server 900. Then, the digital signage platform providing apparatus 800 may calculate the reference point of the building area for displaying content information related to the plurality of pieces of POI information on the basis of the sensing data of the vehicle obtained by the vehicle sensing data collection (823) and the spatial coordinates and the floor number information of the building area.

The calculation of the reference point is a process for providing a realistic sense as if a signage signboard is displayed on an actual building by matching the viewpoint of an actual driving road or the above-mentioned driving image to the viewpoint of a screen in which the content information related to the plurality of pieces of POI information is to be rendered.

Next, the digital signage platform providing apparatus 800 performs a rendering request for displaying AR digital signage corresponding to the content information related to the plurality of pieces of POI information in a display area determined based on the calculated reference point.

To this end, the information or data filtered and processed by the data filtering (824) is AR-merged with map information collected through the cloud server 900 continuously and in real time (825). The digital signage platform providing apparatus 800 provides the AR-merged (825) information or data to an AR engine to request AR rendering.

The AR engine 830 may be embedded in the digital signage platform providing apparatus 800 as shown in FIG. 8. Alternatively, in other embodiments, the AR engine 830 may be implemented by the user terminal 200, the user interface device 200 (see FIG. 7) of the vehicle shown in FIG. 7, or a processor included in the navigation system 770 or may be implemented by a separate terminal, apparatus, or cloud server.

In response to the AR rendering request, the AR engine 830 may perform AR rendering (831) on a route of navigation (832) (or 2D or 3D map information on the basis of the AR-merged (825) information or data in real time. Thus, the actual driving road and the viewpoint of the screen in which the AR digital signage is to be rendered are matched with each other.

The result of rendering through the AR engine 830 may be transmitted to the user terminal 200. Based on the rendering result, the user terminal 200 may map the AR digital signage to corresponding floors of the building in the driving image displayed on the display of the user terminal 200 or a display device of the vehicle 100, for example, a center information display (CID), a cluster, a head-up display (HUD), a room mirror display, a rear-seat entertainment (RSE) system, a vehicle windshield/dashboard, or the like and output the mapped AR digital signage on a floor-by-floor basis.

In this case, a driving image captured or reflected through a camera sensor provided in the vehicle 100 is output to the display of the user terminal 200 or a display or LCD screen provided in the CID, HUD, or RSE of the vehicle 100, and AR digital signage is mapped to the corresponding driving image. On the other hand, a vehicle display device such as an AR navigation system maps AR digital signage to the vehicle windshield or dashboard by direct projection through a laser sensor or the like provided in the vehicle 100.

Therefore, in the present disclosure, a "driving image" includes an image captured through a camera sensor (or smart glasses including such a function, an image reflected on the LCD screen through a camera sensor, an actual space image displayed on a windshield or dashboard into which AR digital signage is directed projected, digitally-twinned 3D image, and the like.

Meanwhile, the user terminal 200 may transmit the mapping result to the digital signage platform providing apparatus 800 such that the display area in which the image of the AR digital signage is mapped and the display area of the building in the driving image or the actual driving road are matched with each other and may receive an image correction request from the digital signage platform providing apparatus 800 continuously and in real time.

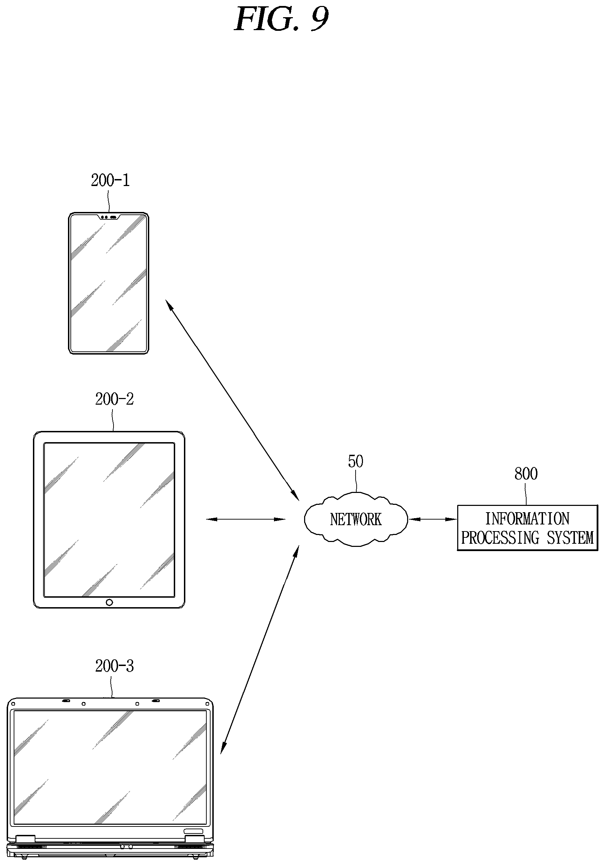

FIG. 9 is a block diagram showing that an information processing system is communicatively connected to a plurality of user terminals.

FIG. 9 is a schematic diagram illustrating a configuration in which an information processing system 800 is communicatively connected to a plurality of user terminals 200_1, 200_2, and 200_3. Here, the information processing system 800 may refer to a system capable of providing a digital signage platform according to the present disclosure. Also, the plurality of user terminals 200_1, 200_2, and 200_3 may be referred to as a device such as a user terminal embedded in, provided in, or connected to the vehicle 100.

As shown, the plurality of user terminals 200_1, 200_2, and 200_3 may be connected to an information processing system capable of providing an AR rendering request result for generating AR digital signage over a network 50. Here, the plurality of user terminals 200_1, 200_2, and 200_3 may include a terminal of an authorized operator (e.g., a registered driver or the like) and/or a user who can receive an AR rendering request result for generating AR digital signage.

In an embodiment, the information processing system 800 may include one or more server apparatuses and/or databases capable of storing, providing, and executing computer-executable programs (e.g., downloadable applications) and data related to the generation of AR digital signage or one or more distributed computing devices and/or distributed databases based on cloud computing service.

The result of the rendering request for the AR digital signage provided by the information processing system 800 may be provided to a user through an application related to the provision of AR digital signage, a route guidance application, a mobile browser application, a web browser, or a web browser extension program which is installed in each of the plurality of user terminals 200_1, 200_2, and 200_3.

For example, the information processing system 800 may provide information corresponding to an AR digital signage provision request received from the user terminals 200_1, 200_2, and 200_3 through the route guidance application or the like or may perform a corresponding process.

The plurality of user terminals 200_1, 200_2, and 200_3 may communicate with the information processing system 800 over the network 50. The network 50 may be configured to enable communication between the information processing system 800 and the plurality of user terminals 200_1, 200_2, and 200_3. For example, depending on the installation environments, the network 50 may be configured as a wired network such as Ethernet, wired home network (power line communication), a telephone line communication device, and RS-serial communication, a wireless network such as a mobile communication network, wireless LAN (WLAN), Wi-Fi, Bluetooth, and Zigbee, or a combination thereof. The communication scheme is not limited to the above networks and may include short-range wireless communication between the user terminals 200_1, 200_2, and 200_3 as well as a communication scheme that utilizes a communication network (e.g., a mobile communication network, the wired Internet, the wireless Internet, a broadcast network, a satellite network, etc.).

In FIG. 9, the plurality of user terminals 200_1, 200_2, and 200_3 may be any computing device that is capable of wired and/or wireless communication and in which an application related to the provision of AR digital signage, a route guidance application, a mobile browser application, a web browser, or a web browser extension program can be installed and executed.

For example, the user terminal includes an Al speaker, a smartphone, a mobile phone, a navigation system, a computer, a laptop computer, a digital broadcasting terminal, a personal digital assistant (PDA), a portable multimedia player (PMP), a tablet PC, a game console, a wearable device, an Internet of things (IoT) device, a virtual reality (VR) device, an augmented reality (AR) device, a set-top box, and the like.

Alternatively, for example, the user terminal may be a vehicle display device such as a CID, a cluster, a HUD, a room mirror display, an RSE, etc.

Also, the three user terminals 200_1, 200_2, and 200_3 are illustrated in FIG. 9 as communicating with the information processing system 800 through the network 50, but the present disclosure is not limited thereto. A different number of user terminals may be configured to communicate with the information processing system 800 via the network 50.

For example, the information processing system 800 may receive a request for route guidance or a request for the provision of AR digital signage from the plurality of user terminals 200_1, 200_2, and 200_3. The information processing system 800 may collect and merge information for generating AR digital signage in response to the received request, render the information in a display area to be displayed with AR signage, and provide the rendered information to the plurality of user terminals 200_1, 200_2, and 200_3.

Specifically, the information processing system 800 may receive sensing data of the vehicle 100 (see FIG. 8), request the cloud server to provide map information associated with the received vehicle sensing data, and receive and store the map information. The information processing system 800 may detect a building area including a plurality of pieces of POI information, calculate spatial coordinates of the detected building area, and acquire floor number information for each of the plurality of pieces of POI information on the basis of the received map information.

Also, the information processing system 800 may calculate the reference point of the building area for displaying content information related to the plurality of pieces of POI information on the basis of the sensing data of the vehicle and the spatial coordinate and floor number information of the building area. Also, the information processing system 800 may perform a rendering request to display AR digital signage corresponding to the content information related to the plurality of pieces of POI information in the display area determined based on the calculated reference point. Here, the rendering request may be performed by an AR engine, and the AR engine can be understood as referring to the operation of processors of the user terminals 200_1, 200_2, 200_3, a processor of an electric device embedded in the vehicle, a processor of the information processing system 800, or a processor of a linked apparatus, server, or system.

Subsequently, the information processing system 800 may transmit the result of the AR rendering request to the user terminals 200_1, 200_2, and 200_3 and may transmit an image correction request such that the user terminals 200_1, 200_2, and 200_3 map an image of the AR digital signage corresponding to the result of the rendering request to a display area of a building in a driving image acquired through a vision sensor on a floor-by-floor basis. The user terminals 200_1, 200_2, and 200_3 may map and output the image of the AR digital signage to the display area of the building in the driving image on a floor-by-floor basis and/or may map and output the image of the AR digital signage on a floor-by-floor basis in response to the image correction request received from the information processing system 800.

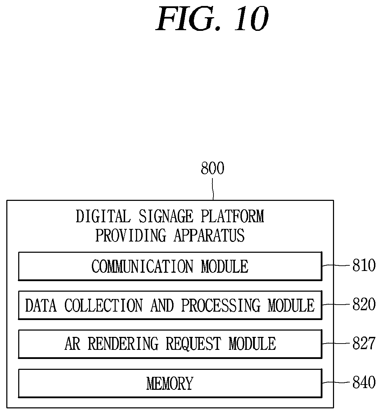

FIG. 10 is a diagram illustrating a configuration of the digital signage platform providing apparatus 800.

In some embodiments, the digital signage platform providing apparatus 800 may be implemented as a device embedded in the navigation system 770 or the user terminal 200 embedded in or linked with the vehicle 100, as described above. Also, in some embodiments, the digital signage platform providing apparatus 800 may be implemented as a platform provided by the cloud server. Also, in other embodiments, the digital signage platform providing apparatus 800 may be implemented in the form of a separate terminal, device, system, or program independent of the vehicle 100 and the cloud server.

Referring to FIG. 10, the digital signage platform providing apparatus 800 may include a communication module 810, a data collection and processing module 820, an AR rendering request module 830, and a memory 840. However, the present disclosure is not limited thereto, and the digital signage platform providing apparatus 800 may include fewer elements or more elements. For example, the digital signage platform providing apparatus 800 may include an additional element such as an AR engine formed to perform rendering.

The communication module 810 is formed so that the digital signage platform providing apparatus 800 can communicate with the cloud server 900 (see FIG. 8), the vehicle 100, and the user terminal 200. For example, in order to perform communication, the digital signage platform providing apparatus 800 may include at least one or a transmitting antenna, a receiving antenna, and a radio frequency (RF) circuit and an RF device capable of implementing various communication protocols or may include a wired or wireless interface device.

The data collection and processing module 820 collects, filters, and processes information that is related to vehicle sensing data, image data, a user input request, map information, and content information such as the location, the number of floors, and advertisements of the building area including the plurality of pieces of POI information and that is received through the communication module 810. Also, the information collection and processing module 820 may perform a series of operations for filtering, processing, and merging one or more pieces of information to generate AR digital signage corresponding to the content information related to the plurality of pieces of POI information.

The AR rendering request module 830 performs a rendering request to generate AR digital signage corresponding to the plurality of pieces of POI information. The AR rendering request module 830 causes the AR engine to, in operative association with a route guidance map of the vehicle, match the viewpoint (first viewpoint) of the driving image or the actual driving road to the viewpoint (second viewpoint) of the screen in which the AR digital signage is to be rendered, determine the display area in which the AR digital signage is to be rendered, and vary the display area continuously or in real time.

The memory 840 includes programs and instructions related to the overall operation of the digital signage platform providing apparatus 800. The memory 840 is communicatively connected to at least one processor (not shown), and the at least one processor may execute a program implemented with at least one computer-readable instructions included in the memory 840.

To this end, the memory 840 may include instructions for, in response to a request received from the user terminal, receiving sensing data of the vehicle linked with the user terminal and requesting the cloud server to provide map information associated with the sensing data of the vehicle. Also, the memory 840 may include instructions for calculating spatial coordinates of the building area including the plurality of pieces of POI information from the map information received from the cloud server and acquiring floor number information for each of the plurality of pieces of POI information on the basis of the spatial coordinates. Also, the memory 840 may include instructions for calculating the reference point of the building area in which the content information related to the plurality of pieces of POI information is to be displayed, on the basis of the sensing data of the vehicle and the floor number information and the spatial coordinates of the building area. Also, the memory 840 may include instructions for performing a rendering request to display AR digital signage corresponding to the content information in a display area determined based on the calculated reference point (i.e., a location in which an AR object is to be rendered). Also, the memory 840 may include instructions for transmitting the result of the rendering request to the user terminal and performing an image correction request to allow the user terminal to map the image of the AR digital signage corresponding to the result of the rendering request to the display area in the driving area acquired through the vision sensor on a floor-by-floor basis.

Meanwhile, the digital signage platform providing apparatus 800 configured to include such a configuration or function may be implemented as a part of a device or system embedded in the vehicle 100, implemented as a separate device or system, or embedded in the user terminal (or the user interface device 200 (see FIG. 7) or the navigation system 770).

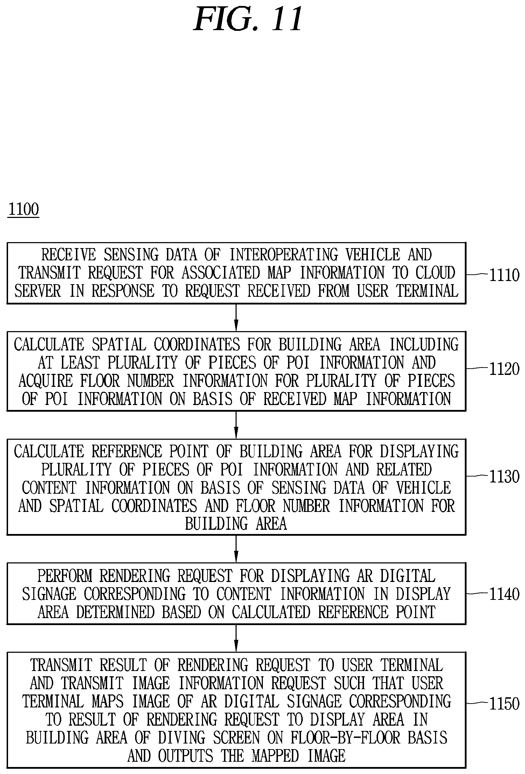

FIG. 11 is a representative flowchart illustrating an operating method 1100 of a digital signage platform providing apparatus .

The operating method 1100 of FIG. 11 may be implemented by a processor provided in the digital signage platform providing apparatus 800 or a processor provided in a user terminal (or a vehicular electronic device or system of a vehicle, a cloud server, etc.) communicatively connected to the digital signage platform providing apparatus 800 and may provide a platform for generating AR digital signage.

Referring to FIG. 11, first, the operating method 1100 is disclosed as a process of receiving, by the digital signage platform providing apparatus, sensing data of a linked vehicle and transmitting a request for associated map information to the cloud server in response to a request received from the user terminal (1110).

In an embodiment, the map information may include POI information and 2D/3D map information included within a predetermined range based on the current location of the vehicle. In another embodiment, the map information may be a driving image captured through a vision sensor, such as a camera, of the vehicle.

The digital signage platform providing apparatus calculates spatial coordinates of the building area including the plurality of pieces of POI information from the received map information and acquires floor number information for each of the plurality of pieces of POI information (1120).

In other words, when a building including a plurality of POIs is detected or recognized from the map information by the processor of the digital signage platform providing apparatus, the digital signage platform providing apparatus may calculate xyz coordinate information of the building as the spatial coordinates.

In one embodiment, when the map information is 2D/3D map information received from the cloud server, the digital signage platform providing apparatus may receive the information regarding the location, height, and number of floors of the building area including the plurality of pieces of POI information on the basis of the map information and calculate the spatial coordinates of the building area. In another embodiment, when the map information is a driving image acquired through a camera provided in the vehicle, the digital signage platform providing apparatus may estimate the location, height, and number of floors of the building area on the basis of the driving image and estimate the spatial coordinates from the location, height, and number of floors.

In this way, when the spatial coordinates of the building area are calculated, the digital signage platform providing apparatus may calculate or estimate floor number information for each of the plurality of pieces of POI information included in the building area. For example, the digital signage platform providing apparatus may calculate a floor-by-floor height value, i.e., a height offset on the basis of the height and number of floors of the building included in the spatial coordinates of the building area and may compute or estimate the number of floors corresponding to the plurality of pieces of POI information on the basis of the calculated height offset.

Subsequently, the digital signage platform providing apparatus calculates a reference point for displaying content information related to the plurality of pieces of POI information on the basis of the sensing data of the vehicle and the spatial coordinates and floor number information of the building area (1130).

Here, POI-related content information may refer to a brand icon, a 3D model, a still image, and a moving image for POl-related advertisement exposure.

The reference point of the building area for displaying the content information may be calculated by matching the information regarding the vehicle sensing data (the vehicle's driving speed and direction), the spatial coordinates of the building area, and the floor number information of the plurality of pieces of POI information to correspond to the driving image. That is, by using AR technology, the viewpoint of the driving image or the actual driving road (e.g., in the case of an AR navigation device in which AR digital signage is projected on a windshield through a laser sensor) and the content information are matched to the viewpoint of the screen for finding the reference point of the building area for displaying the content information.

In an embodiment, the reference point may be determined as a coordinate point close to the current location among the spatial coordinates of the building area on the basis of the driving direction of the vehicle.

In an embodiment, the display area for each of the plurality of pieces of POI information is obtained by applying a height offset to the floor number information corresponding to the plurality of pieces of POI information with respect to the reference point and is set as a location moved from the reference point by a corresponding floor number + a height offset.

Here, the coordinate point close to the current location of the vehicle may be acquired or estimated by detecting edges of the building identified using coordinate data included in the map information or camera sensing information provided in the vehicle. In this case, a reference point for each piece of content information corresponding to the plurality of pieces of POI information (hereinafter referred to as a "floorwise reference point") may be set as the reference point + a height offset corresponding to a floor number matched to each piece of POI information. That is, a floorwise reference point is calculated for and applied to each of the plurality of pieces of content information.

The digital signage platform providing apparatus performs an AR rendering request to display AR digital signage corresponding to the content information in a display area determined based on the calculated reference point (1140).

In this regard, the digital signage platform providing apparatus may determine display areas for mapping a plurality of pieces of AR digital signage matched to the plurality of pieces of POI information to corresponding floors of the building.

Specifically, the digital signage platform providing apparatus may determine the display areas of the plurality of pieces of AR digital signage corresponding to the plurality of pieces of POI information using floor number information matched to the plurality of pieces of POI information and height information of the building area calculated based on the spatial coordinates for the building area.

In an embodiment, when the spatial coordinates for the building area cannot be acquired based on the map information, the digital signage platform providing apparatus may determine a display area to which the content information is to be mapped by using floor number information and height information of the building area estimated using the camera sensing information included in the vehicle sensing information.

Meanwhile, the AR rendering request performed by the digital signage platform providing apparatus is performed by an AR engine. The AR engine may be implemented by a processor of the digital signage platform providing apparatus, a processor of the user terminal, a processor of another vehicular electronic device or system of the vehicle, or a cloud server.

When rendering is performed through the AR engine as described above, the digital signage platform providing apparatus transmits a result of the rendering request to the user terminal. Thus, the digital signage platform providing apparatus transmits an image correction request to the user terminal so that the user terminal maps an image of AR digital signage corresponding to the result of the rendering request to a display area of the building in the driving image acquired through the vision sensor on a floor-by-floor basis and then outputs the image (1150).

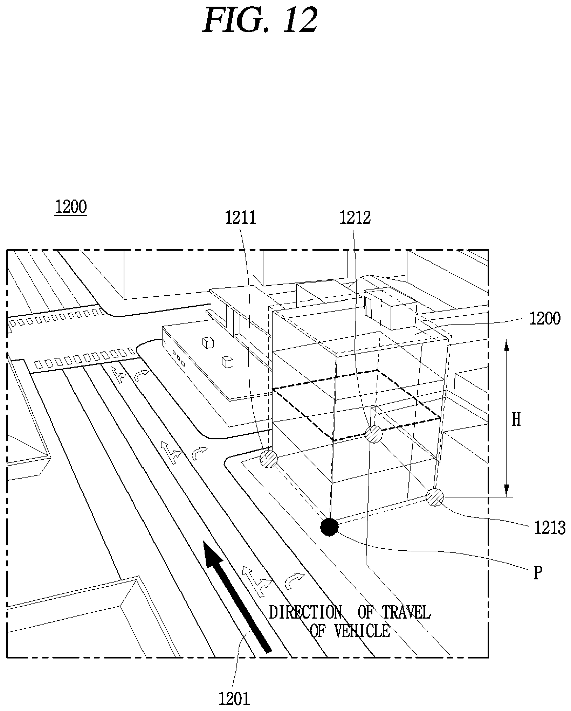

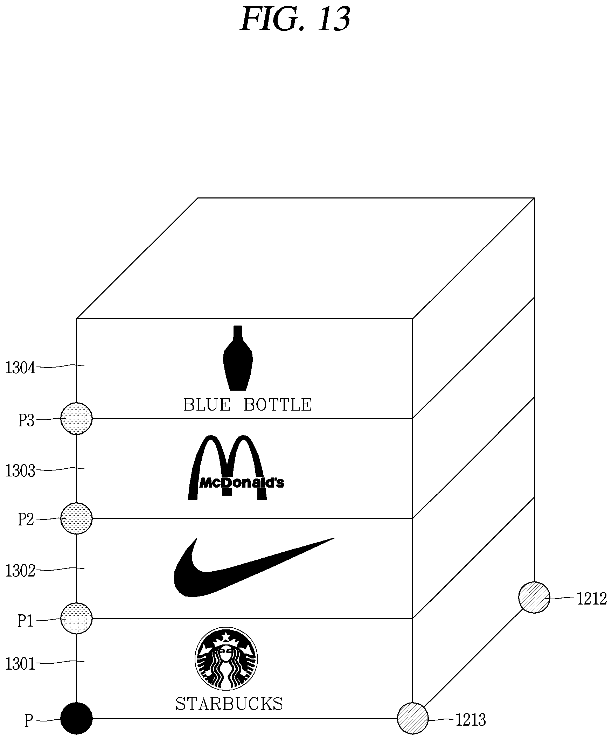

In an embodiment, the image correction request may be a request for mapping the image of the AR digital signage so that each display area matched to a corresponding piece of content information is moved from the calculated reference point by the height of each piece of floor number information. This will be described in detail below with reference to FIGS. 12 and 13.

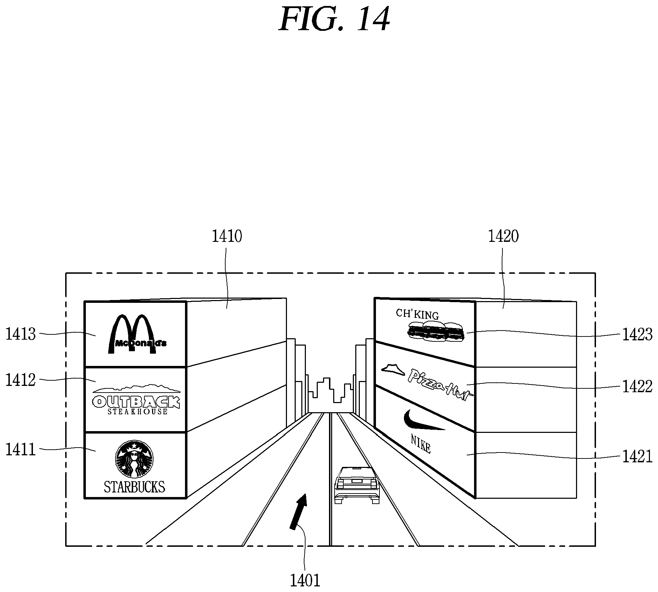

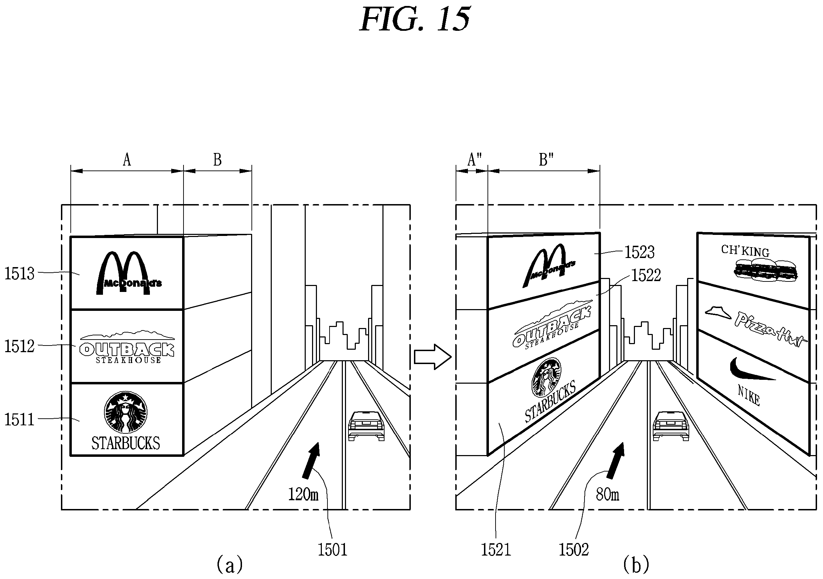

Also, in an embodiment, the image correction request may be a request to map, on a floor-by-floor basis, AR digital signage to a display area that is changed based on the reference point (or a floorwise reference point) and the driving direction and speed of the vehicle. A specific example thereof will be described in detail below with reference to FIGS. 14 and 15.

FIGS. 12 and 13 are diagrams illustrating a method of arranging AR digital signage on a floor-by-floor basis in a building area of a driving image.

The method of arranging AR digital signage on a floor-by-floor in a building area of a driving image may be implemented by a processor of the digital signage platform apparatus. Alternatively, as another example, the method may be implemented by a processor of a vehicle display device (e.g., a user interface device, navigation system, or the like provided in a vehicle) including a digital signage platform or may be implemented by a communicatively connected cloud server.

Referring to 12, when a building area 1200 including a plurality of pieces of POI information is detected, the digital signage platform providing apparatus may calculate (or estimate) spatial coordinates 1211, 1212, 1213, and P for the building areas on the basis of the map information (e.g., 2D/3D map information, the number of floors of the building area, and height information, etc.) or the driving image acquired through a camera provided in the vehicle.

The digital signage platform providing apparatus may extract an origin P for mapping AR digital signage to the driving image on a floor-by-floor basis by using the sensing data of the vehicle (e.g., a vehicle driving direction), the spatial coordinates 1211, 1212, 1213, and P, and the information on the height and number of floors of the building included in the map information (or estimated through the detection of edges of the driving image).

That is, considering the driving direction 1201 of the vehicle among the spatial coordinates 1211, 1213, 1213, and P of the building area, reference coordinates closest to the location of the vehicle included in the sensing data of the vehicle is set as the origin P.

For example, when the information on the number of floors and height of the building area 1200 can be acquired, the digital signage platform providing apparatus may calculate the origin P considering the driving direction of the vehicle. However, when the map information for the building area 1200 is not present (or is not recognized) or when the information on the number of floors and height cannot be acquired, the digital signage platform providing apparatus may extract the origin of the building area by estimating the number of floors and height of the building from the image of the building using the sensing information of the camera provided in the vehicle and detecting edges of the image. In this case, the height for each floor may use a predefined value.

Meanwhile, in order to display a plurality of pieces of AR digital signage on a floor-by-floor basis, a "floorwise reference point" should be calculated for each of the plurality of pieces of AR digital signage.

In this regard, referring to FIG. 13, the "floorwise reference point" for each of the plurality of pieces of AR digital signage may be placed by moving the height by the number of floors of the POI information with respect to the origin P and the spatial coordinates 1211, 1212, 1213, and P of the building area. That is, the digital signage platform providing apparatus determines, as a "floorwise reference point," a location to which a height offset corresponding to the number of floors matched to the origin P + each piece of POI information is applied, and requests correction such that corresponding AR digital signage is mapped to the location.

In FIG. 13, the reference point of first AR digital signage 1301 displayed on the first floor of the building area 1200 is determined as the origin P. The floorwise reference point of second AR digital signage 1302 displayed on the second floor of the building area 1200 is determined as a point P1 obtained by applying a height offset corresponding to the second floor to the origin P. Also, the floorwise reference points of third AR digital signage and fourth AR digital signage displayed on the third floor and the fourth floor of the building area 1200 are determined as points P2 and P3 obtained by applying the height offsets corresponding to the third floor and the fourth floor to the origin P.

In order to more accurately calculate the height information of the building area, in one embodiment, the digital signage platform providing apparatus may compare the height information (e.g., an interfloor height offset) of each display area determined based on the floorwise reference points and the height information included in the map information (e.g., 2D/3D map information) received from the cloud server and may correct at least one of the location and shape of each display area on the basis of the comparison result. Also, in an embodiment, when the detected difference between the height information and the value of a set of interfloor heights that are initially calculated and the height information of the building area acquired through a database (DB) is greater than or equal to a threshold value (a normal error range), the digital signage platform providing apparatus may correct the location of each display area using the height information of the database (DB).

For example, the digital signage platform providing apparatus may change the interfloor height offset described with reference to FIG. 13. Alternatively, the digital signage platform providing apparatus may, for example, map a plurality of pieces of AR digital signage 1301, 1302, 1303, and 1304 to the lateral side, not the front side, of the building area 1200 in FIG. 13 on a floor-by-floor basis.

Meanwhile, in an embodiment, the plurality of pieces of AR digital signage 1301, 1302, 1303, and 1304 mapped to the building area 1200 on a floor-by-floor basis surround at least one side of each display area of the building in the driving image. For example, in FIG. 13, the plurality of pieces of AR digital signage 1301, 1302, 1303, and 1304 are formed to surround the front side of the building area 1200 on a floor-by-floor basis. Accordingly, a plurality of advertisement exposure effects are provided to one building on a floor-by-floor basis, and this gives a realistic feeling as if a real signage signboard is placed on the building.

Example methods of naturally and variably providing images of a plurality of pieces of augmented reality (AR) digital signage by flexibly reflecting various changes in a building's shape based on a driver's viewing angle (or a vehicle's front viewing angle), a vehicle driving situation, a driver's personal tendency, and nearby traffic and structural environments will be described below.

As described above, when AR digital signage such as an actual signage electric signboard is provided on one side of a building area on a floor-by-floor basis, a realistic feeling is further increased. However, since it does not reflect vehicle driving or nearby situations, there is a limitation in that the advertising exposure time is short.

In addition, when AR digital signage is always mapped to a specific display area of a building (e.g., the front of a building), the size of the specific display area may decrease or disappear from view depending on the current location and driving direction of the vehicle. In this case, the advertising exposure time of AR digital signage is reduced by that much.

Furthermore, when the specific display area to which the AR digital signage is mapped is obscured by a structure, the AR digital signage may not be recognized at all. That is, as the visibility of AR digital signage is not secured, the advertising effect is reduced.

FIG. 14 is a diagram illustrating a method of selecting a display area of floorwise AR digital signage on the basis of the shape of a building area.

In the present disclosure, the form of a building area or the shape of an image of a building area refers to the shape of the front and lateral sides of the building area varying in real time with respect to a driver's view (or a vehicle's front view) in two dimensions. Also, the shape of the front and lateral sides of the building area may be expressed as numerical information about the front and lateral sides of the building area varying in real time with respect to a driver's view (or a vehicle's front view) in two dimensions.

Here, the driver's view (or the vehicle's front view) may be assumed to coincide with the driving direction of the vehicle. Also, here, the numerical information may include, for example, the areas of the front and lateral sides of the building area, the area ratio, and the distortion ratio.

In an embodiment, the display device 200 may determine a display area of AR digital signage on the basis of an image of the building area in the driving image. When the display area is changed based on the shape of the image of the building area, the display device 200 may map the AR digital signage to the changed displayed area and display the mapped AR digital signage.

Here, the determining of the display area based on the image of the building area may refer to the display device 200 determining the display position of floorwise AR digital signage on the side of a building in a driving image acquired through a vision sensor by communication with a system including the above-described digital signage platform providing device 800 and the vehicle 100.

The display position may be one of the front side or the lateral side of the building area. In the present disclosure, the display position may be determined to be more advantageous in securing the visibility of the AR digital signage.

Also, here, the changing of the display area based on the shape of the image of the building area may refer to the display device 200 changing the display position of floorwise AR digital signage from the front side (or the lateral side) of the building in the driving image acquired through the vision sensor to the lateral side (or the front side) or to other nearby locations by communication with a system including the above-described digital signage platform providing device 800 and the vehicle 100.

The changed display position may include other nearby locations outside the building as well as the front side or the lateral side of the building area. In the present disclosure, the changed display position is determined to be a side that is advantageous in securing the visibility of the AR digital signage or to be another position.

To this end, the display device 200 receives, from the vehicle 100, vehicle sensing data including driving-related information (e.g., the driving direction and driving speed of the vehicle, etc.) and information on the driving image acquired through the vision sensor in real time. Also, the display device 200 may deliver the collected data to the digital signage platform providing system so that the digital signage platform providing system can perform data collection, processing, filtering, and merging for displaying the AR digital signage on the determined or changed display area on a floor-by-floor basis and perform an AR rendering request.

Referring to FIG. 14, for example, while the vehicle is driving, building area A 1410 and building area B 1420 each including a plurality of pieces of POI information in the driving image are displayed on the left and right sides of the driving road. A first plurality of pieces of AR digital signage 1411, 1412, and 1413 are mapped to building area A 1410 on a floor-by-floor basis, and a second plurality of pieces of AR digital signage 1421, 1422, and 1423 are mapped to building area B 1420 on a floor-by-floor basis.

The display areas of the first plurality of pieces of AR digital signage 1411, 1412, and 1413 and the second plurality of pieces of AR digital signage 1421, 1422, 1423 are determined to be positions that are advantageous in securing visibility with respect to the driving direction 1401 of the vehicle.

The first plurality of pieces of AR digital signage 1411, 1412, and 1413 and the second plurality of pieces of AR digital signage 1421, 1422, and 1423 are displayed on display areas that are advantageous in securing visibility on the front and lateral sides of the building areas 1410 and 1412, respectively. For example, the lateral side of building area A 1410 is determined as the display area of the first plurality of pieces of AR digital signage 1411, 1412, and 1413, and the front side of building area B 1420 is determined as the display area of the second plurality of pieces of AR digital signage 1421, 1422, and 1423.

This is because, based on the driving direction 1401 of the vehicle, the lateral side is more advantageous in securing visibility in the case of building area A 1410 and the front side is more advantageous in securing visibility in the case of building area B 1420.

As described above, in the present disclosure, the display device 200 may be operated to determine the display areas on the basis of the image of the building area and change the display areas on the basis of the shape of the image of the building area in order to allow different display sides of each building area in the driving image to be determined as the display areas of the floorwise AR digital signage at the same time.

To this end, the display device 200 may determine the display area on the basis of the widths (areas) of the front side and the lateral side in order to determine, as the display area, a position with high visibility in the front and lateral sides of the building area with respect to the driving direction of the vehicle.

In an embodiment, the display device 200 may compare the difference between the widths (areas) of the front side and the lateral side of the building area to a preset critical value and may select one of the front side and the lateral side on the basis of the comparison result. Here, the preset critical value refers to a reference value for determining a display area only by the width size. Accordingly, the display device 200 may be limited to use only widths to determine a display area only when the difference of the widths (areas) of the front side and the lateral side of the building area exceeds the preset critical value.

For example, when the difference between the widths of the front side and the lateral side of the building area exceeds the preset critical value, the display device 200 may select the wider one of the front side and the lateral side of the building area as the display area. On the other hand, when the difference between the widths of the front side and the lateral side of the building area falls below the preset critical, the display device 200 may determine a preset position (e.g., the front side of the building area) as the display area or may display the display area on the basis of another selection criterion.

In an embodiment, when the difference between the widths (areas) of the front side and the lateral side of the building area falls below the preset critical, the display device 200 may select one of the front side and the lateral side of the building area as the display area on the basis of the image distortion ratio of the floorwise AR digital signage.

For example, when the difference between the widths of the front side and the lateral side of the building area falls below the preset critical value, the display device 200 may select the one of the front side and the lateral side of the building area in which the image distortion ratio of the floorwise AR digital signage is smaller as the display area. Alternatively, when the difference between the widths of the front side and the lateral side of the building area falls below the preset critical value, the display device 200 may select the one of the front side and the lateral side of the building area in which the distortion ratio of text (font) included in the floorwise AR digital signage is smaller as the display area. Here, the image distortion ratio of the front side and the lateral side of the building area and the distortion ratio of text (font) included in the floorwise AR digital signage may be calculated after a predetermined weight is assigned to each image.

In FIG. 14, the first plurality of pieces of AR digital signage 1411, 1412, and 1413 are mapped to display areas of the lateral side of building area A 1410 in which the difference between the widths (areas) of the front side and the lateral side of the building area falls below the preset critical value and in which the image distortion ratio of the floorwise AR digital signage is smaller.

Also, in FIG. 14, the second plurality of pieces of AR digital signage 1421, 1422, and 1423 are mapped to display areas of the front side of building area B 1420 in which the difference between the widths (areas) of the front side and the lateral side of the building area exceeds the preset critical value and which has a greater width than the lateral side.

As described above, the display device 200 may determine the display area of the image of the floorwise AR digital signage on the basis of the image of the building area in the driving image acquired through the vision sensor by communication with the vehicle 100 and the digital signage platform providing system. Also, the display device 200 may change the display area on the basis of the shape of the image of the building area in the driving image acquired through the vision sensor, transmit information on the changed display area to the digital signage platform providing system, and receive a rendering result or related information for mapping an image of the AR digital signage corresponding to the changed display area from the corresponding system.

Also, in an embodiment, a processor of the display device may change the display area on the basis of the image distortion ratio of the building area recognized through the camera of the vehicle. In this case, by transmitting the information on the changed display area to the digital signage platform providing system, the display device may receive the rendering result or related information for displaying the AR digital signage on the changed display area on a floor-by-floor basis.

FIG. 15 is a diagram illustrating a method of selecting a display area of floorwise AR digital signage on the basis of vehicle driving information.

In the present disclosure, even after the display area is determined and the AR digital signage is displayed on a floor-by-floor basis, the display device may calculate the widths of the front side and the lateral side of the building area changing along with the driving of the vehicle, change the display area on the basis of the calculation result, and map the floorwise AR digital signage to the changed display area. This provides an advantageous effect of securing the visibility of AR digital signage in real time.

As described above, in order to calculate the widths of the front side and the lateral side of the building area changing along with the driving of the vehicle, the display device 200 may calculate the widths on the basis of the change in shape of the image of the front side and the lateral side of the building acquired through the vision sensor of the vehicle.

In FIG. 15, as shown in 15A, at the beginning (at a first time point), a plurality of pieces of AR digital signage 15111, 1512, and 1513 are mapped and displayed using the lateral side of the building area in the driving image as the display area. As described above with reference to FIG. 14, since the difference between the widths A and B of the front side and the lateral side of the building area is less than or equal to the preset critical value on the basis of the current location and the driving direction 1501 of the vehicle at the first time point, the lateral side, which has a smaller image distortion ratio, is determined as the display area.

Subsequently, when the vehicle approaches the building area (a second time point after the first time point) as the vehicle is driving, as shown in FIG. 15B, the display area is changed to the front side of the building area in the driving image, and a plurality of pieces of AR digital signage 1521, 1522, and 1523 are mapped and displayed. That is, although the display area has been determined once, the display device 200 changes the display area itself from the lateral side to the front side beyond mapping the plurality of pieces of AR digital signage 1511, 1512, and 1513 according to the image of the display area of the lateral side varied along with the driving of the vehicle.

Since the difference between the widths A" and B" of the front side and the lateral side of the building area exceeds the preset critical value on the basis of the current location and the driving direction 1502 of the vehicle at the second time point, the front side, which is a greater width, may be determined as the display area.

In an embodiment, the processor of the display device 200 may change the display area to which the image of the floorwise AR digital signage is to be mapped on the basis of the sensing data of the vehicle received while the vehicle is driving.

For example, as described above with reference to FIG. 15, the display device 200 may receive the sensing data of the vehicle (e.g., the current location and driving direction of the vehicle) in real time and monitors whether the difference between the widths of the front side and the lateral side of the same building area exceeds the preset critical value.

When the monitoring result is that the difference between the width values exceeds the preset critical value, the side that has a greater width at the current time may be displayed as the display area. In this case, when the floorwise AR digital signage is currently displayed on the side that has a smaller width, the display area may be changed. On the other hand, when the monitoring result is that the difference between the widths is less than or equal to the preset critical value, the one of the front side and the lateral side that has a smaller image distortion ratio (e.g., the side that has a smaller aspect ratio (height offset) difference) is determined as the display area. In this case, when the floorwise AR digital signage is currently displayed on the side having a larger image distortion ratio, the display area may be changed.

In an embodiment, when the areas of the front side and the lateral side of the building area in the driving image acquired through the vision sensor change along with the driving of the vehicle, the processor (or the control unit) of the display device 200 may transmit information on the change in the areas to the digital signage platform providing system. Here, the information on the change in the areas may include, for example, information related to the change of the display area such as the difference between the widths of the front side and the lateral side of the building area, the result of comparing the difference between the widths to the critical value, and the image distortion ratios of the front side and the lateral side.

Also, in an embodiment, the processor of the display device 200 may receive a result of a rendering request for generating AR digital signage on the basis of the information on the changed in the areas and may change the display area of the floorwise AR digital signage from one side of the building area in the driving image to another side and then perform mapping.

In an embodiment, the processor of the display device 200 may map the floorwise AR digital signage while gradually moving the floorwise digital signage from one side of the building area in the driving image to another side according to the driving direction and driving speed of the vehicle.

For example, referring to FIG. 15, when it is determined that the display area is changed from the lateral side to the front side, the first plurality of pieces of AR digital signage 1511, 1512, and 1513 that have been displayed on a floor-by-floor basis on the lateral side of the building may gradually move toward the front side along with the driving of the vehicle as shown in FIG. 15A and may be seamlessly moved and then displayed on the front side of the building after a certain period of time as shown in FIG. 15B. Thus, an antipathy to the display of the second plurality of pieces of AR digital signage 1521, 1522, and 1523 is minimized, and the advertising exposure time is increased as the digital signage is moved along the driving direction of the vehicle.

Meanwhile, when AR digital signage is displayed on a building of a driving image on a floor-by-floor basis, a realistic feeling is further increased like real signage. However, as a vehicle approaches the building, the building and the signage mapped to the building deviate from the driving image, and thus visibility is reduced.

However, when a vehicle enters a building including a plurality of pieces of POI information or when a destination POI is located in a building, the need for floorwise AR digital signage is further increased. Accordingly, a method of providing differentiated floorwise AR digital signage while a vehicle approaches a building area including a plurality of pieces of POI information and enters or is expected to enter the corresponding building area will be described in detail below.

In the present disclosure, a situation in which a vehicle enters a building area may be determined based on sensing data of the vehicle including the current location of the vehicle, the distance between the vehicle and the corresponding building area, and the driving speed of the vehicle. For example, when the vehicle approaches the corresponding building area and reduces the driving speed without situations such as waiting for a light change or finding an obstacle, this may be determined as a situation in which the vehicle enters the building area.

In the present disclosure, a situation in which a vehicle is expected to enter a building area may be determined based on the current location of the vehicle, the distance between the vehicle and the corresponding building area, whether a destination or waypoint POI is included in the building area, the specificity of the building area, whether a user's preferred band or POI is included, and the like.

In the present disclosure, the case in which conditions for allowing a vehicle to enter a building area are satisfied may refer to a case corresponding to a situation in which the vehicle enters the building area and/or a situation in which the vehicle is expected to enter the building area. In the present disclosure, whether the conditions for allowing a vehicle to enter a building area are satisfied may refer to determining whether the vehicle enters the building area and/or whether the vehicle is expected to enter the building area.

In the present disclosure, an AR carpet refers to an AR object that is mapped as if a thin layer of carpet is laid in a certain range of a road/sidewalk/floor in a driving image. The AR carpet may be implemented to have a transparency equal to a certain value or a predetermined texture, pattern, or the like so that the area of the mapped road/sidewalk/floor can be seen transparently and then may be mapped.

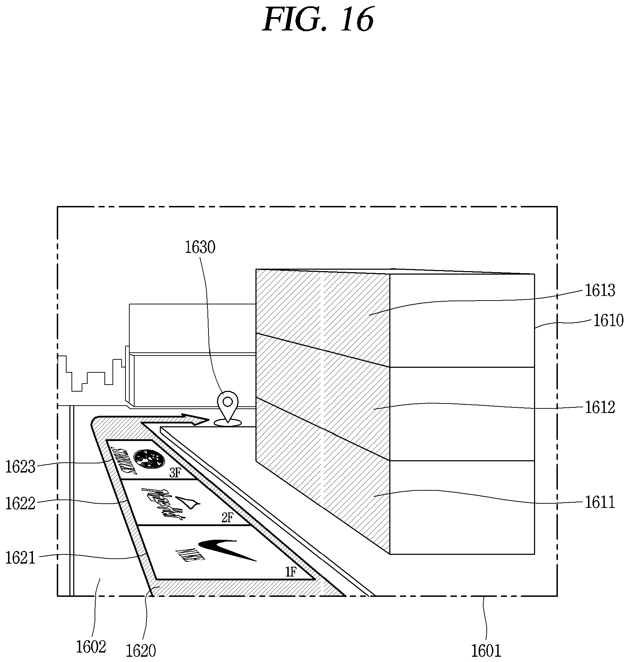

FIG. 16 is a diagram illustrating a method of mapping floorwise AR digital signage to an AR carpet rather than to a building.

In the present disclosure, a display device 200 linked to a vehicle (e.g., a center information display (CID), a cluster, a head-up display (HUD), a rearview mirror display, a rear seat entertainment (RSE), and a display device or terminal that projects driving images onto the vehicle's windshield or dashboard) may map and display floorwise AR digital signage on a driving image projected or acquired through a vision sensor (e.g., a camera, an imaging laser sensor, etc.) of the vehicle.

To this end, a processor of the display device 200 may communicate with the vehicle and the digital signage platform providing system and may transmit a request for generating the AR digital signage on a floor-by-floor basis to the corresponding system. Also, the processor of the display device 200 may receive a result of the request from the system and may map and display corresponding AR digital signage on a building area in the driving image on a floor-by-floor basis. To this end, the processor of the display device 200 may be implemented to include an AR engine or perform the same function as an AR engine.

Referring to FIG. 16, the display device 200 may map and display a plurality of pieces of AR digital signage 1611, 1612, and 1613 on one surface of a building 1610 in a driving image 1601 acquired through the vision sensor of the vehicle on a floor-by-floor basis.

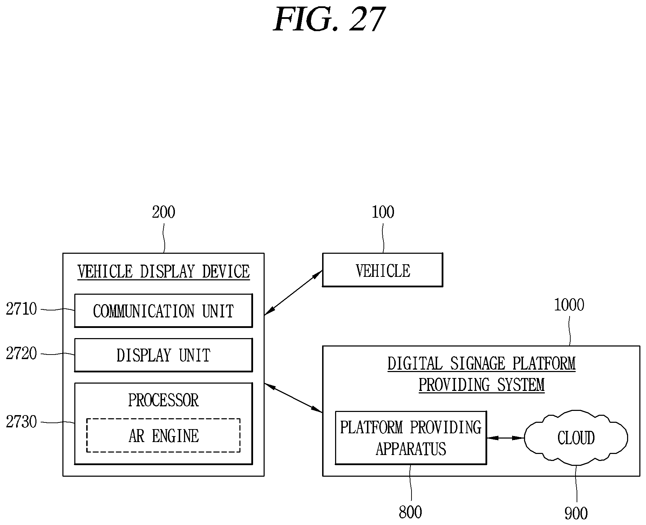

To this end, the display device 200 may communicate with the vehicle to receive the sensing data of the vehicle, for example, the current location of the vehicle, driving-related information of the vehicle, and the like. Also, the display device 200 may communicate with the digital signage platform providing system 1000 (see FIG. 27) to transmit the sensing data of the vehicle, receive associated POI information, for example, the spatial location of the building including a plurality of pieces of POI information and floor number information, and receive traffic-related information of the vehicle from a cloud.

The display device 200 may recognize at least the spatial location of the building area including the plurality of pieces of POI information on the basis of the received information.

The display device 200 may transmit, to the system 1000, a request for generating AR digital signage corresponding to content information related to the plurality of pieces of POI information on a floor-by-floor basis (hereinafter referred to as a first request) using the sensing data of the vehicle, the spatial location of the building area, and the floor number information. Also, the display device 200 may receive the results of collection, processing, filtering, and matching of data corresponding to the request from the system 1000 and may map and display AR digital signage on the building in the driving image on a floor-by-floor basis.

The display device 200 may transmit, to the system 1000, a request for generating an AR carpet for guiding entry into the building in the driving image (hereinafter referred to as a second request) on the basis of the driving-related information included in the sensing data of the vehicle. Also, the display device 200 may receive the results of collection, processing, filtering, and matching of data corresponding to the request from the system 1000 and may map and display an AR carpet on the road in the driving image.

In this case, the mapping position of the AR carpet may be determined based on the current location of the vehicle. For example, the AR carpet may be mapped and displayed in the range of 2 to 10 m ahead of the current location of the vehicle and the road lane in which the vehicle is traveling.

In an embodiment, the display device 200 may transmit the first request and the second request simultaneously or sequentially. Also, the display device 200 may receive the results of the first request and the second request from the system 1000 simultaneously or sequentially. Also, the display device 200 may map and display AR objects (e.g., floorwise AR digital signage and AR carpet) corresponding to the received result according to the current locations of the vehicle and the building area and whether predetermined conditions are satisfied, irrespective of the order in which the results of the first and second requests are received.

Referring to FIG. 16, when the vehicle approaches the building 1610 and at least one of the plurality of pieces of POI information included in the corresponding building 1610 is set as a destination POI 1630, the processor of the display device 200 may determine this case as the situation in which the vehicle is about to enter the building 1610 or the situation in which the vehicle is expected to enter the building 1610.

In this case, the processor of the display device 200 may map and display the AR carpet 1620 for guiding entry into the building 1610 to the road 1602 in the driving image 1601 on the basis of the result of the request for generating the AR carpet received from the linked digital signage system.

When the AR carpet 1620 is mapped and displayed on the road 1602 in the driving image 1601, the processor of the display device 200 may monitor, for a certain time (e.g., within one or two seconds), whether there is a change in the situation in which the vehicle is about to enter the building 1610 or the situation in which the vehicle is expected to enter the building 1610.

When the monitoring result is that there is no change in the situation in which the vehicle is about to enter the building 1610 or the situation in which the vehicle is expected to enter the building 1610, the processor of the display device 200 changes the AR carpet 1620 to a display area and maps and displays the plurality of pieces of AR digital signage 1621, 1622, and 1623 on the AR carpet 1620. In this case, the plurality of pieces of AR digital signage 1611, 1612, and 1613 that have been displayed on the front of the building 1610 on a floor-by-floor basis may be resized and displayed continuously (e.g., with a size smaller than the front surface of the building 1610) or may disappear.

When the monitoring result is that the situation in which the vehicle enters the building 1610 or the situation in which the vehicle is expected to enter the building 1610 is changed (e.g., when the vehicle is running straight past the building 1610), the processor of the display device 200 may operate so that the AR carpet 1620 is no longer displayed on the road 1602 in the driving image 1601. This is because it is no longer necessary to guide the entry of the vehicle.

In an embodiment, the AR digital signage mapped and displayed on the AR carpet 1620 may be limited to some of the plurality of pieces of AR digital signage 1621, 1622, and 1623. For example, although not shown, the mapped and displayed AR digital signage may be limited to only AR digital signage corresponding to floorwise representative POI information, or the maximum number of pieces of AR digital signage to be displayed on the AR carpet 1620 (e.g., less than five or a number smaller than the number of floors of the building 1610) may be preset.

The AR carpet 1620 may include visual information (e.g., an arrow image) for guiding entry into the building 1610. For example, when the building 1610 includes a destination POI in FIG. 16, the AR carpet 1620 may be implemented and mapped to include an indication for the destination POI 1630 and visual information (e.g., an arrow image) for guiding a parking lot of the building 1610.

The plurality of pieces of AR digital signage 1621, 1622, and 1623 mapped on the AR carpet 1620 may be sequentially displayed on floorwise display areas (i.e., the AR carpet 1620) of the building 1610 on the basis of the current location of the vehicle and driving direction. For example, in FIG. 16, the first AR digital signage 1621, the second AR digital signage 1622, and the third AR digital signage 1623 may be mapped and displayed according to the driving direction of the vehicle as if they are spread (layered) on the AR carpet 1620 according to the floor order of the floorwise AR digital signage of the building 1610. This is different from the above-described method in which the floorwise AR digital signage is mapped and displayed on the front or side of the building as if it were erected in the longitudinal direction of the building.

As described above, the display device according to the present disclosure is implemented to map and display an AR carpet and a plurality of pieces of AR digital signage on a road in a driving image rather than on a building in order to secure the visibility of the advertisement signage in the situation in which the vehicle is about to enter the building or the situation in which the vehicle is expected to enter the building. Also, visual information can be provided to a road ahead without a driver having to change his or her gaze to the building to see the destination POI, and this helps safe driving.

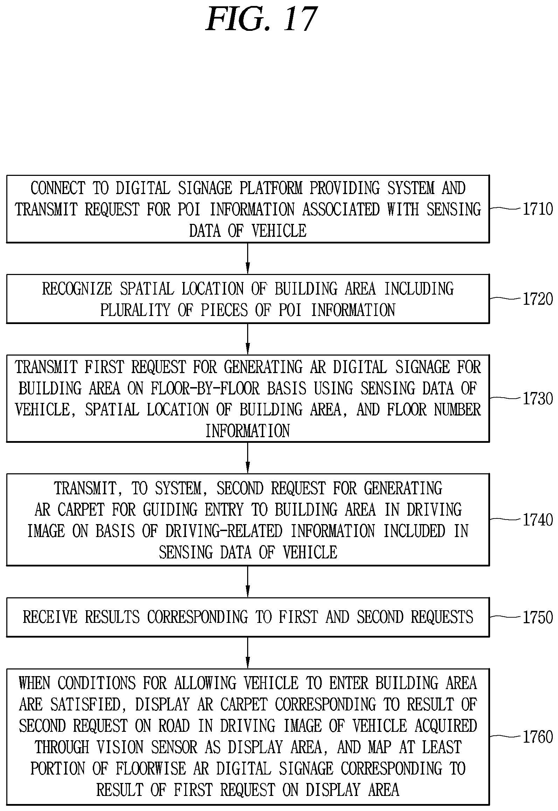

FIG. 17 is a flowchart illustrating a method of mapping floorwise AR digital signage to an AR carpet in a diving image acquired through a vision sensor. A display device linked to a vehicle may perform the following operations by at least one processor.

Referring to FIG. 17, the processor of the display device s connected to a digital signage platform providing system (hereinafter, referred to as a system) through a communication module to transmit a request for POI information associated with the sensing data of the vehicle (1710). To this end, the display device is linked to the vehicle to receive the sensing data of the vehicle from a vehicular electronic device, an advanced driver assistance system (ADAS) sensor, or other systems and provide the sensing data to the system.

Subsequently, the processor of the display device recognizes a spatial location of a building area including a plurality of pieces of POI information on the basis of the POI information received from the system (1720). Here, the spatial location may refer to x-, y-, and z-coordinate information of a building including the plurality of pieces of POI information. In an embodiment, the spatial location may be transmitted together with the POI information from the system and/or a cloud linked to the system.

Subsequently, the processor of the display device transmits, to the system, a first request for generating AR digital signage corresponding to content information related to the plurality of pieces of POI information on a floor-by-floor basis using the sensing data of the vehicle, the spatial location of the building area, and the floor number information (1730).

Here, the sensing data of the vehicle may include the current location of the vehicle, driving-related data (e.g., the driving speed, the driving direction, a brake signal, a danger signal, and the like of the vehicle) acquired through GPS and ADAS sensors of the vehicle, and data related to the driving image acquired through the vision sensor of the vehicle. Also, the floor number information of the building area may be received from the system or may be received from the cloud linked to the system.

Here, the first request may include a request for causing the system to collect, process, filter, and match various data to generate the AR digital signage on a floor-by-floor basis and for causing the system to transmit the result so that the processor of the display device can perform AR rendering based on the result. In this case, by mapping, in real time, an AR object (here, floorwise AR digital signage) corresponding to the result on the driving image acquired through the vision sensor of the vehicle, the processor of the display device may display the floorwise AR digital signage on the building.

In an embodiment, the first request may include a command to extract floorwise representative POI information of the building area. For example, when a plurality of pieces of POI information are included in one layer, the processor of the display device may make a request to select representative POI information to implement AR digital signage of the corresponding layer on the basis of a smaller number (e.g., one) of pieces of POI information. In this case, the selection of the representative POI information may be made based on user preference, brand recognition, service class, and the like.

In an embodiment, the first request may be performed based on a user input to the display device. The user input may include various types of user inputs, such as a touch input to the touch screen of the display device, an input to a specific key (a hard key or a soft key), a voice command input, a gesture input, and the like.

Subsequently, the processor of the display device may transmit, to the system, a second request for generating an AR carpet for guiding entry into the building area in the driving image on the basis of the driving-related information included in the sensing data of the vehicle.

Here, the driving-related information included in the sensing data of the vehicle may include, for example, the driving speed of the vehicle, the lane change of the vehicle, and information related to a waypoint/destination included in a driving guidance route.

In an embodiment, the first request may be transmitted to the system as long as a building area including a plurality of pieces of POI information is detected, and the second request may be performed when a present condition (a second condition) is satisfied after the first request is transmitted (a first condition). Here, the second condition may be a condition associated with the driving-related information included in the sensing data of the vehicle. For example, when the building area including the plurality of pieces of POI information is detected, the display device may operate to transmit the first request to the system and then transmit the second request when the distance between the vehicle and the corresponding building area is in a certain range and the driving speed is reduced to a certain range.

Subsequently, the display device receives results corresponding to the first and second requests from the system through the communication module (1750). Here, the results corresponding to the first and the second requests may be received simultaneously or sequentially. However, even if the first and second requests are sequentially received, the order in which corresponding AR objects (e.g., the floorwise AR digital signage and the AR carpet) are displayed may vary. For example, even if the result corresponding to the first request is received before the result corresponding to the second request, the AR carpet corresponding to the first request may be displayed first in the driving image.

After the results corresponding to the first and second requests are received, the processor of the display device determines whether conditions for allowing the vehicle to enter the building area are satisfied. Also, based on the result, the processor of the display device may display the AR carpet corresponding to the result of the second request on the road in the driving image acquired through the vision sensor of the vehicle as a display region and may map at least a portion of the floorwise AR digital signage corresponding to the result of the first request to the display area.

In an embodiment, the display device may map and display, by using the process, floorwise AR digital signage corresponding to the result of the first request in the display area of the building area in floor order on the basis of the location and driving direction of the vehicle.

Here, the display area may be changed depending on whether conditions for allowing the vehicle to enter the building area are satisfied. Specifically, when the conditions for allowing the vehicle to enter the building area are not satisfied (e.g., when the vehicle is at least a certain distance away from the building, when it is confirmed that the vehicle will not enter the building or that the vehicle is not expected to enter the building, etc.), the display area may be the front/side of the building in the driving image. However, when the conditions for allowing the vehicle to enter the building area are satisfied, the display area may be an AR carpet mapped on the road in the driving image.

In an embodiment, whether the conditions for allowing the vehicle to enter the building area are satisfied may be determined based on at least one of the current location of the vehicle, the driving-related information of the vehicle, the characteristics of the building area, the correlation between the building area and the destination, and user preference.

For example, when the driving speed decreases while the current location of the vehicle becomes close to the building area, the processor of the display device may determine that the conditions for allowing the vehicle to enter the building area are satisfied.

Alternatively, for example, when the destination of the vehicle is set at a relatively remote distance (e.g., it takes more than 2 hours to arrive at the destination) and the building area includes the characteristics of convenience facilities such as a parking lot, a rest area, a gas station, etc., the processor of the display device may determine that the conditions for allowing the vehicle to enter the building area are satisfied.

Alternatively, for example, when it is detected based on the sensing data of the vehicle that vehicle inspection is required due to insufficient gasoline or air pressure reduction and the building area includes facilities such as a gas station/service station, the processor of the display device may determine that the conditions for allowing the vehicle to enter the building area are satisfied.

Alternatively, for example, when a building area including POI information such as a preferred brand, a frequent place, and a hot place that are set by a driver/user is detected at a location near the current location of the vehicle, the processor of the display device may determine that the conditions for allowing the vehicle to enter the corresponding building area are satisfied.

Meanwhile, in an embodiment, the floorwise AR digital signage may be mapped and displayed on the building in the driving image on a floor-by-floor basis while the conditions for allowing the vehicle to enter the building area are not satisfied. When the conditions are satisfied, the floorwise AR digital signage may be moved and mapped to the AR carpet.

Specifically, the processor of the display device maps and displays an image of the floorwise AR digital signage corresponding to the result of the first request on the building in the driving image on a floor-by-floor basis. Subsequently, when it is detected, based on the sensing data of the vehicle, that the vehicle approaches within a certain range from the building area and the driving speed of the vehicle is less than or equal to a threshold range, the AR carpet may be displayed as a guidance route in the driving image. Subsequently, when a result of monitoring for a predetermined time (e.g., 1 to 2 seconds) shows that the entry of the vehicle is more confidently predicted, the processor of the display device considers that the conditions for allowing the vehicle to enter the corresponding building area are satisfied and maps and displays the floorwise AR digital signage on the AR carpet at regular intervals in the driving direction.

As described above, when the conditions for allowing the vehicle to enter the building area are satisfied as described above, the floorwise AR digital signage may be displayed differently from the conventional method of mapping and displaying AR digital signage on a building on a floor-by-floor basis, in order to enhance visibility. Specifically, by displaying the AR carpet that guides entry into the corresponding building area on the road in the driving image and sequentially displaying AR digital signage on a floor-by-floor basis, it is possible to satisfy both visibility and driver convenience along with floorwise signage guidance.

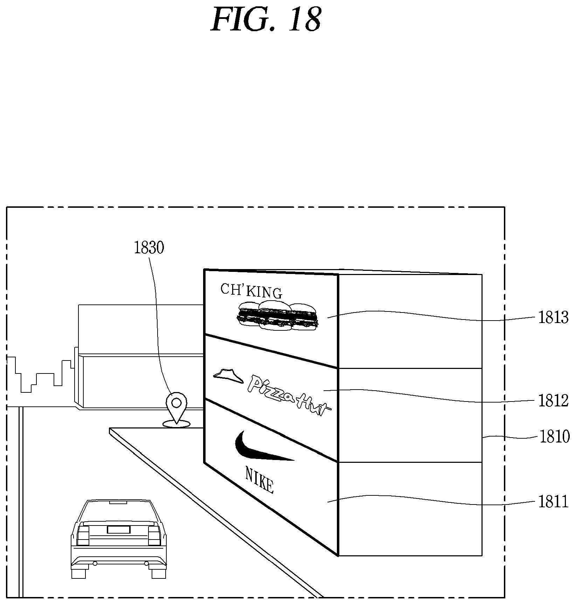

FIGS. 18, 19, 20, and 21 are diagrams illustrating that AR digital signage that has been displayed on a building on a floor-by-floor basis is mapped on an AR carpet of a road as a vehicle approaches a building area.

Specifically, FIGS. 18 to 21 sequentially disclose an example of changing an AR carpet according to the driving of a vehicle and a plurality of pieces of AR digital signage mapped to the AR carpet in a situation where the vehicle is about to enter a building.

First, referring to FIG. 18, the display device 200 maps and displays a plurality of pieces of AR digital signage 1811, 1812, and 1813 on one surface of a building 1810 in a driving image acquired through a vision sensor of the vehicle on a floor-by-floor basis, and thus realistic advertisement signage is provided to a driver.

In this case, each piece of the AR digital signage 1811, 1812, and 1813 may be composed of a floorwise representative POI. Also, the content may include an advertisement, a brand, and news information related to the representative POI for each layer, and each piece of content may be implemented as an AR object in the form of a brand icon, a 3D model, a still image, and a video image.

When the corresponding building 1810 includes POI information such as a destination/waypoint, a POI indication 1830 may be displayed in the driving image.

When the corresponding building 1810 includes POI information such as a destination/waypoint and the vehicle drives to the location of the POI indication 1830, the display device 200 may determine that the conditions for allowing the vehicle to enter the building 1810 are satisfied.

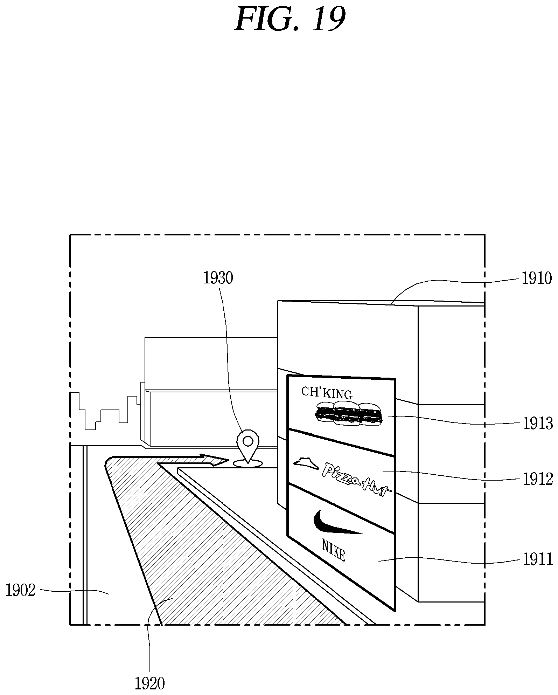

In this case, as shown in FIG. 19, the display device 200 may map and display an AR carpet 1920 that guides entry into a building 1910 on a road 1902 in the driving image. The AR carpet 1920 may be implemented to include information on guidance to the location of the POI indication 1830 (or the location of a parking entrance) from the current location of the vehicle in the driving direction.

In an embodiment, when the vehicle approaches within a certain range from the building 1910 and the driving speed of the vehicle is less than or equal to a threshold range, the display device 200 may be restricted to display the AR carpet as a guidance route in the driving image.

As described above, when the vehicle drives toward the POI indication 1830, the distance between the vehicle and the building 1910 becomes closer, and accordingly, some of the plurality of pieces of AR digital signage 1811, 1812, 1813 displayed on the building 1910 are out of the field of view of the driving image together with the building 1910. In this case, the advertisement effect can be reduced due to reduced visibility, and also a dangerous situation may occur in which a driver changes his or her gaze from the front of the vehicle to the building to see the destination POI.

Thus, in an embodiment, as the vehicle approaches the building area, the processor of the display device 200 may gradually reduce AR digital signage that has been displayed on the building of the driving image on a floor-by-floor basis and map and display the reduced AR digital signage. Accordingly, as shown in FIG. 19, a plurality of resized (or reduced) pieces of AR digital signage 1911, 1912, and 1913 are displayed on the building 1910. In this case, although a realistic feeling is reduced compared to before, this can help to secure visibility and drive safety.

In an embodiment, a rate at which the AR digital signage is resized may be determined based on the distance between the building and the vehicle. For example, as the distance between the vehicle and the building decreases, the AR digital signage may be reduced stepwise. In this case, the amount of information or content type included in the resized AR digital signage may also be changed.

In still another embodiment, the shape of the AR digital signage may be changed differently as the vehicle approaches the building area. For example, the floorwise AR digital signage is displayed while the distance between the vehicle and the building is greater than or equal to a predetermined value, and the floorwise AR digital signage may be reshaped to a simple AR object such as a symbol and an icon when the distance is less than the predetermined value.

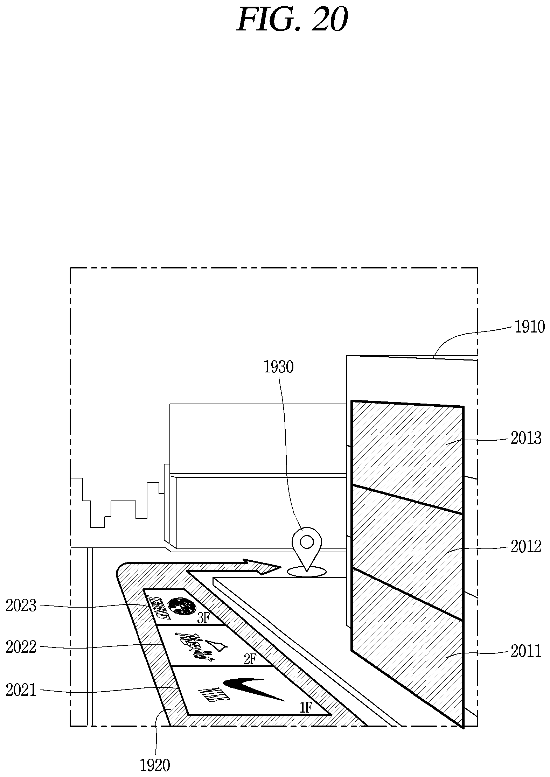

Subsequently, as shown in FIG. 20, when it is determined that the vehicle approaches a destination POI indication 1930 or at least conditions for allowing the vehicle to enter the building area are maintained for a certain period of time, the processor of the display device 200 may move and map floorwise AR digital signage 2021, 2022, and 2023 on the AR carpet 1920 that guides entry to the building 1910.

To this end, the display device 200 may transmit a rendering request to the system 1000 (FIG. 27) so that the image of the floorwise AR digital signage moves from the building 1910 to the AR carpet 1920 at a certain time after the AR carpet is displayed. In this case, the rendering request may be a request for collecting, processing, filtering, and merging data for generating a plurality of pieces of AR digital signage to be mapped on the AR carpet 1920.

Subsequently, the display device 200 may receive a result of the request from the system 1000 and map and display the floorwise AR digital signage 2021, 2022, and 2023 on the AR carpet 1920. In this case, the result of the request may refer to a result of the system 1000 collecting, processing, filtering, and merging the data.

In FIG. 20, the plurality of pieces of AR digital signage 2021, 2022, and 2023 displayed on the AR carpet 1920 may be connected and mapped and may include corresponding floor number information (e.g., 1F, 2F, and 3F). Also, although not shown, in another embodiment, the plurality of pieces of AR digital signage 2021, 2022, and 2023 may not be laid on the AR carpet 1920 but may be mapped in different forms (e.g., a signboard form, a hovering form, etc.). However, in consideration of safe driving and the appearance of other obstacles on the road, the shape change may be restricted within a range that does not sufficiently cover the road image in the driving image.

Subsequently, in the building 1910 of the driving image of FIG. 20, a plurality of pieces of AR digital signage 2011, 2012, and 2013 may be displayed in a variable form, may be no longer displayed, or may be displayed as highlighted images. Thus, the driver may immediately recognize that AR information currently being displayed on the AR carpet 1920 is about the building 1910.

Next, as the vehicle approaches the entry point of the building 1910, that is, the destination POI indication 1930, the display device 200 may map and display only the AR digital signage 2111 corresponding to the destination POI information on a changed AR carpet 1920'. That is, when the entry of the vehicle is more certain, the information may be more intuitively provided to the driver by providing only advertisement signage related to the destination POI information.

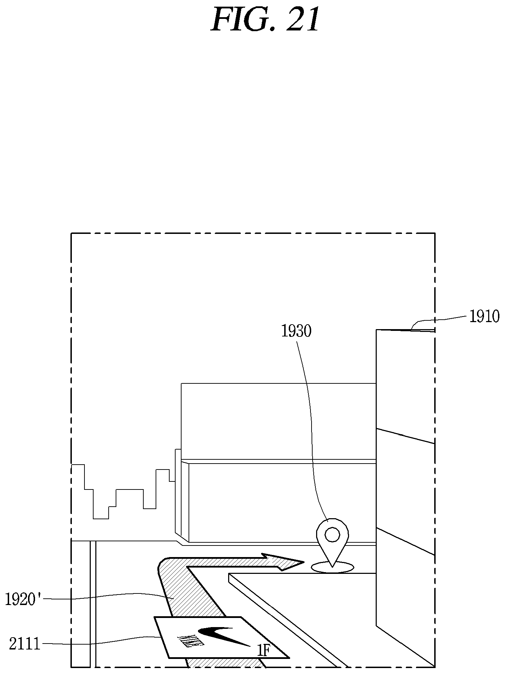

Meanwhile, the changed AR carpet 1920' may refer to a reduction in the width of the carpet image as shown in FIG. 21. However, the present disclosure is not limited thereto, and the AR carpet 1920 may be changed by an increase in the transparency of the carpet image or by another shape of entry guidance indication (e.g., a solid line, a dotted line, etc.) to be distinguished from a lane.

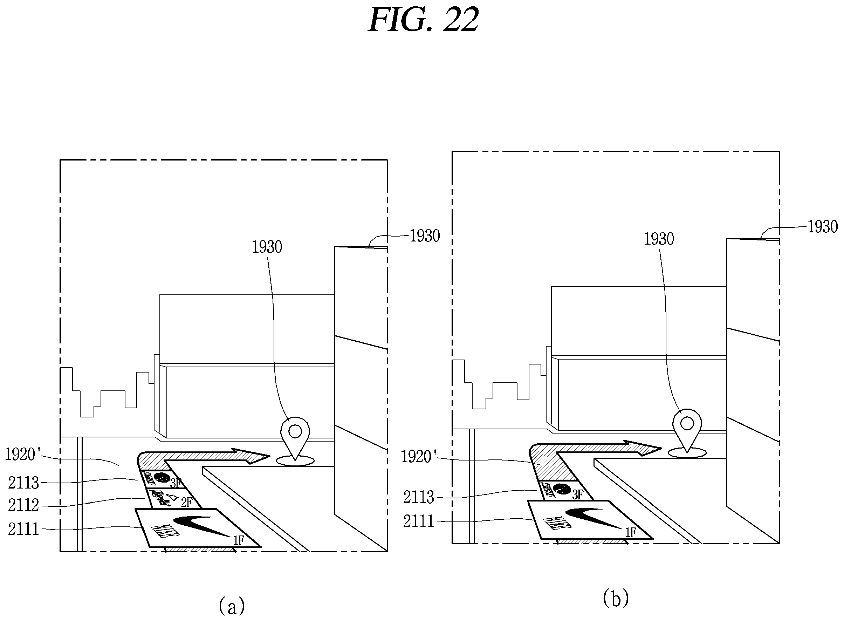

FIG. 22 is a diagram illustrating that AR digital signage corresponding to destination POI information is highlighted and mapped and displayed on an AR carpet.

As described above, when it is more certain that a vehicle is about to enter a building, displaying advertisement signage on the building may not only reduce visibility but also interfere with safe driving. This can be addressed by displaying an AR carpet on the road in front of the vehicle and mapping AR digital signage on the AR carpet. Meanwhile, FIG. 22 presents a method of changing AR digital signage to more intuitively provide information to the driver in a situation in which the entry of the vehicle to the building has become more certain.

Accordingly, when it becomes more certain that the vehicle is about to enter the building, the AR carpet is reduced in size, and the image of AR signage of a floor corresponding to the destination POI information and the images of AR signage of other floors may be visually distinctly mapped to the changed display area. In this case, the degree to which the AR carpet is reduced in size may vary based on the distance between the building and the current location of the vehicle or the degree to which the vehicle enters the building.

As shown in FIG. 22A, the AR carpet 1920' is displayed in a reduced size in a situation in which the entry of the vehicle to the building 1910 becomes more certain. Meanwhile, the AR digital signage 2111 corresponding to the destination POI information is displayed in an enlarged size so that the AR digital signage 2111 can be intuitively seen by the driver. At this time, the AR digital signage 2112 and 2113 corresponding to the representative POI information of different layers is displayed in a reduced size. Accordingly, the AR digital signage 2111 corresponding to the destination POI information is made more conspicuous.

In another embodiment, as shown in FIG. 22B, the AR digital signage 2111 corresponding to the destination POI information is displayed in an enlarged size, and AR digital signage corresponding to representative POI information of some other layers may be hidden. Accordingly, the driver can visually recognize information on the destination POI more quickly.

Meanwhile, although not shown, in another embodiment, the plurality of pieces of AR digital signage 2111, 2112, and 2113 may be hidden or become transparent sequentially from the lowest layer while the vehicle is entering the building 1910 in a situation in which the entry of the vehicle to the building 1910 is more certain. In this case, the AR digital signage 2111 corresponding to the destination POI information may be highlighted. Also, the corresponding floor number of the building 1910 may also be highlighted.

Also, in an embodiment, the display range of the AR carpet 1920' may be gradually reduced based on the distance between the vehicle and the destination POI and the driving speed of the vehicle.

In another embodiment, the AR digital signage 2111 corresponding to the destination POI information may be continuously highlighted and displayed on the road and the building (e.g., the corresponding floor number region) in the driving image even while the vehicle is entering the building.

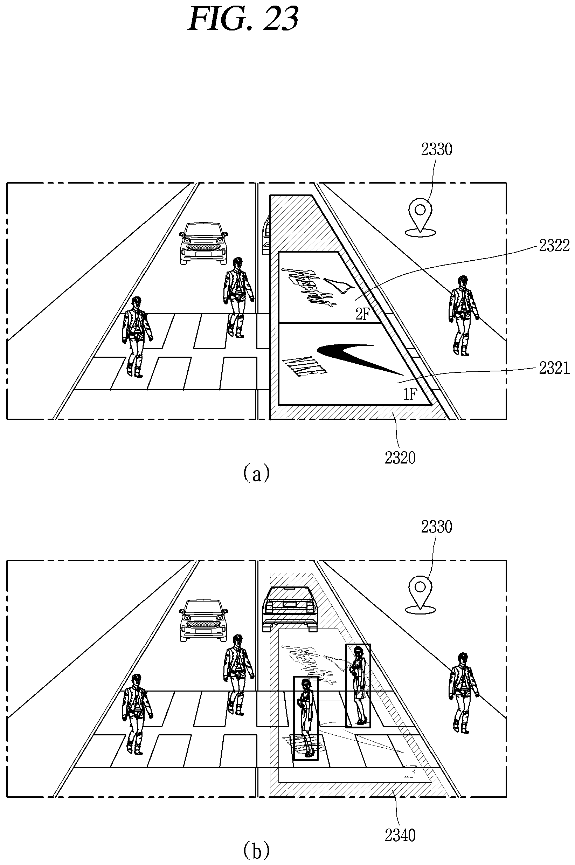

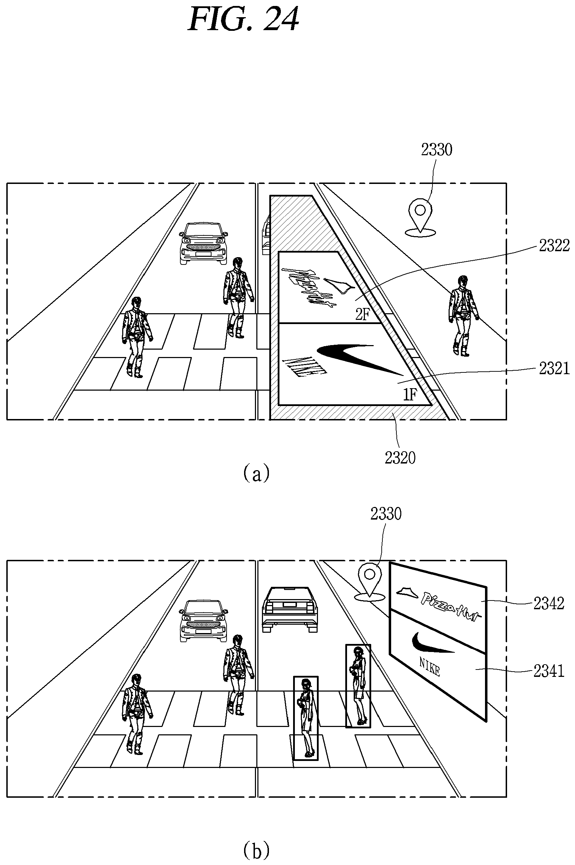

FIGS. 23 and 24 are diagrams illustrating different methods of changing the display of an AR carpet and AR digital signage when an obstacle is on a road.

As described above, when conditions for allowing the vehicle to enter the building are satisfied and thus AR digital signage for the building is mapped on the road of the driving image, visibility is greatly secured. However, exceptionally, when an obstacle appears ahead in the driving direction of the vehicle, the obstacle may interfere with safe driving. Here, examples of how to handle such an exceptional situation will be described.

Thus, when an obstacle is detected in the display area of the AR carpet in the driving image acquired through the vision sensor of the vehicle, the processor of the display device 200 maps and displays the AR carpet and the floorwise AR digital signage so that the detected obstacle can be recognized by changing the transparency of the images of the AR carpet and the floorwise AR digital signage.

To this end, the display device 200 may increase the transparency of the images of the floorwise AR digital signage and the AR carpet being currently displayed, by receiving the sensing data of the vehicle, recognizing the appearance of an obstacle near (in front of and to the sides of) the vehicle, and delivering the related information to the processor. Thus, the driver can more reliably recognize the presence and location of the obstacle that has appeared.

The presence and location of the obstacle may be recognized through sensors of the vehicle linked to the display device 200, for example, an ADAS sensor, a front sensor, etc.

For example, referring to FIG. 23A, while an AR carpet 2320 is mapped and displayed on a road in the driving image of the vehicle and a plurality of pieces of AR digital signage 2321 and 2322 associated with a building including a destination POI 2330 are displayed, a person may pass in front of the vehicle (e.g., at a traffic light crossing).

In this case, the display device 200 may receive sensing data corresponding to a signal sensed through a sensor provided in the vehicle and may map and display a plurality of pieces of AR digital signage 240 and an AR carpet with an increased transparency, as shown in FIG. 23B.

For example, when the previous transparency of the plurality of pieces of AR digital signage and the AR carpet is set to about 60%, the transparency may be increased to more than 80% in the situation shown in FIG. 23B. Accordingly, the driver can more reliably recognize a person who crosses at a pedestrian crossing and perform safe driving.

In another embodiment, the display device 200 may receive the sensing data of the vehicle, recognize the appearance of an obstacle near (in front of and to the sides of) the vehicle, deliver related information to the processor, and move and map the floorwise AR digital signage that has been displayed on the AR carpet to another location.

For example, as shown in FIG. 24A, while the AR carpet 2320 is mapped and displayed on a road in the driving image of the vehicle and a plurality of pieces of AR digital signage 2321 and 2322 associated with the building including the destination POI 2330 are displayed, the AR digital signage 2341 and 2342 may be changed and mapped in the form of signboards as shown in FIG. 24B when a person appears in front of the vehicle. In this case, the changed AR digital signage 2341 and 2342 may be mapped and displayed on adjacent locations off the road (e.g., a boundary area between the road and the sidewalk). Also, the AR carpet 2320 may not be displayed on the road in the driving image while an obstacle is detected.

In this way, when the appearance of an obstacle is detected in the driving direction of the vehicle, the driver may reliably recognize the obstacle and drive safely by stopping the display of the AR carpet and moving and mapping the image of the floorwise AR digital signage to another display area in the driving video.

Meanwhile, although not shown, the AR digital signage may be mapped and displayed on the AR carpet with a preset transparency again at a certain time after an obstacle is no longer detected in front of or in the driving direction of the vehicle on the basis of the sensing data of the vehicle.

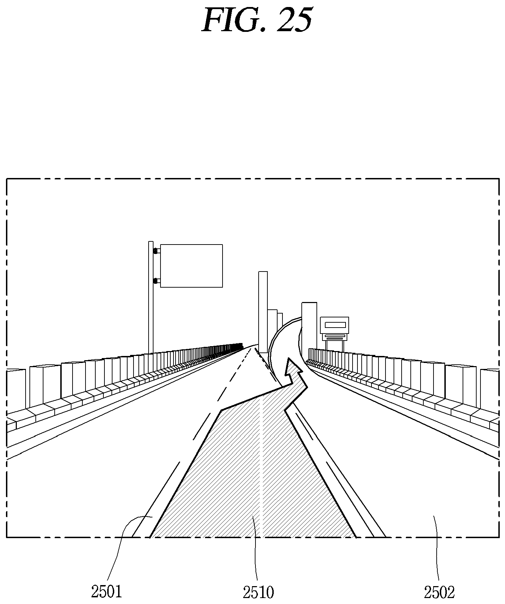

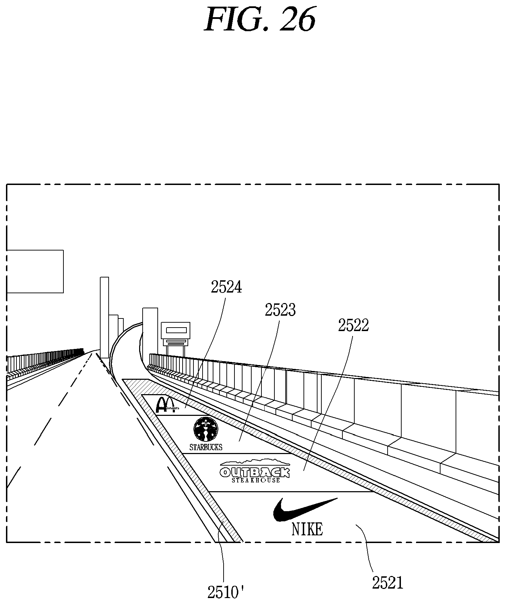

FIGS. 25 and 26 are diagrams illustrating a method of mapping and displaying related AR digital signage on an AR carpet that guides a lane change as the lane change is performed while the AR carpet is displayed,. This embodiment is an embodiment expanded to whether the conditions for allowing the vehicle to enter the building are satisfied.

In the present disclosure, whether the conditions for allowing the vehicle to enter the building area are satisfied may be determined based on at least one of the current location of the vehicle, the driving-related information of the vehicle (e.g., a driving direction, a driving speed, and gasoline/charging gauge information of the vehicle), the characteristics of the building area itself, the correlation between the building area and the destination, and user preference.

Here, the characteristics of the building area itself may refer to a place including a POI or a building having a special purpose related to the movement of the vehicle. For example, the place may include places related to the maintenance, rest, and parking of the vehicle, such as a gas station, a vehicle repair shop, a rest area, and a public parking lot.

Also, the correlation with the destination may include not only the building including the destination POI information but also places or buildings frequently visited during the driving to destinations and buildings with specific brands. Also, when the set destination is a long distance from the current location of the vehicle, a rest area, a gas station, etc. may be included as buildings correlated with the destination.

Also, the user preference may include places or buildings including POI information, building information, or specific brands that are preset by the user or places selected by many places (e.g., hot places).

Referring to FIG. 25, a building area (e.g., a rest area, a gas station, etc.) that satisfies the conditions for allowing the vehicle to enter the building may be detected on a preset driving route of the vehicle on the basis of the correlation with the destination, the characteristics of the building area itself, and the user preference even though there are currently no buildings visible in the driving direction of the vehicle. At this time, it may be necessary to change the driving of the vehicle in order to enter the detected building area. Here, the lane change of the vehicle will be described as an example.

For example, when the vehicle should change the current driving lane 2501 to the right lane 2502 so as to enter the corresponding building area, the display device 200 may map and display an AR carpet 2510 that guides a lane change on the current driving lane 2501 in the driving image acquired through the vision sensor of the vehicle. In this case, the AR carpet 2510 may include visual information for guiding the driver to change lanes from the current driving lane 2501 to the right lane 2502 (e.g., an arrow image toward the right lane 2502).

When the driver changes lanes to the right lane 2502 in response to the display of the AR carpet 2510, the lane change may be detected through the sensing data of the vehicle. Accordingly, as shown in FIG. 26, the display device 200 may display an AR carpet 2510' on the changed lane and may map and display AR digital signage 2521, 2522, 2523, and 2524 corresponding to a plurality of pieces of POI information included in the building that can be entered.

In this case, in FIG. 26, the AR digital signage 2521, 2522, 2523, and 2524 may be displayed in a form as if the signage is laid on the AR carpet 2510', but the present disclosure is not limited to such a display form. For example, the plurality of pieces of AR digital signage 2521, 2522, 2523, and 2524 may be displayed on the AR carpet 2510' as AR objects provided in a signboard form or a floating form.

Meanwhile, when the driver continues to drive straight without changing lanes to the right lane 2502 after the AR carpet 2510 is displayed, the AR carpet 2510 may disappear after a predetermined time.

also, although the AR carpet in the form of guiding entry to the building area has been described above, in an embodiment, an AR carpet of a form that guides the driver not to enter a specific area (e.g., an area under construction or a restricted area), for example, a form that guides the driver to continue to maintain the current lane may be mapped and displayed. In this case, when the current lane is maintained, AR digital signage related to a building that can be entered may be mapped and displayed on the AR carpet.

Also, according to still embodiments, an AR carpet having a form of an arrow branched to guide various entry routes or an AR carpet that guides one entry route may be mapped and displayed. In this case, AR digital signage corresponding to representative POI information may be mapped and displayed on each branched AR carpet.

FIG. 27 is a diagram illustrating that a display device communicates with a vehicle and a digital signage platform providing system.

FIG. 27 is a diagram illustrating that a display device 200 communicates with a vehicle 100 and a digital signage platform providing system 1000.

In FIG. 27, the display device 200 includes a communication unit 2710, a display unit (or an image sensor) 2720, and a processor 2730. The digital signage platform providing system 1000 may include a platform providing apparatus 800 and one or more clouds 900 for communicating with the platform providing apparatus 800.

The display device 200 may receive the sensing data of the vehicle from a system such as a sensor, a vehicular electronic device, and an advanced driver assistance system (ADAS) provided in the vehicle 100 through the communication unit 2710.

Through the communication unit 2710, the display device 200 may transmit the sensing data of the vehicle to the digital signage platform providing system 1000 and may receive POI information associated with the sensing data of the vehicle. To this end, the digital signage platform providing apparatus 800 and the cloud 900 may be communicatively connected to each other.

The display unit 2720 of the display device 200 displays a driving image acquired through a vision sensor (e.g., a camera, an image laser sensor, etc.) of the vehicle. The processor 2730 of the display device 200 transmits information related to the driving image to the digital signage platform providing system 1000 through the communication unit 2710.

The digital signage platform providing system 1000 may perform information filtering and processing to perform merging for generating the AR digital signage on a floor-by-floor basis on the basis of the sensing data of the vehicle received from the vehicle 100, map information associated with the sensing data of the vehicle collected from the cloud 900, POI information, the spatial location of the building including a plurality of pieces of POI information, floor number information, POI-related advertisement information, and information on the driving image received through the display device 200, and the like and may transmit the merging result to the display device 200.

The display device 200 may receive a result of a rendering request that is received from the digital signage platform providing system 1000 to generate the AR digital signage on a floor-by-floor basis and may map the AR digital signage to the building in the driving image on a floor-by-floor basis through the processor 2730. Also, the display device 200 may receive a result of a rendering request that is received from the digital signage platform providing system 1000 to generate an AR carpet for guiding entry to a specific area and may map the result on the road in the driving image through the processor 2730 in the form of an AR carpet. To this end, the processor 2730 may be embedded in or interoperable with an AR engine.

The display device 200 may vary the display area to which the floorwise AR digital signage is to be mapped on the basis of the shape of the image of the building in the driving image acquired through the vision sensor and the sensing data of the vehicle 100 (the current location, the driving speed, and the driving direction of the vehicle) received from the vehicle 100. For example, the display device 200 may vary the display area from the lateral side of the building area in the driving image to the front side and map the AR digital signage on a floor-by-floor basis on the basis of the driving speed of the vehicle and the distance between the current location of the vehicle and the current location of the building.

The display device 200 may move and map, to the AR carpet, AR digital signage that has been mapped on the building on a floor-by-floor basis on the basis of the sensing data of the vehicle 100 (the current location, the driving speed, and the driving direction of the vehicle) received from the vehicle 100.

The display device 200 may transmit information on the varied display area to the digital signage platform providing system 1000 and may receive the sensing data of the vehicle from the vehicle 100 in real time and vary the display area in real time. Here, the varied display area may be determined to be a location other than the building area in the driving image so as to secure visibility, and the other location may be, for example, a road edge adjacent to the building area, a guard rail, or a sidewalk adjacent to the building area, and the surface of a driving road. Also, the varied display area may be the AR carpet mapped on the road in the driving image.

As described above, when conditions for a vehicle to enter a building area are satisfied, it is possible to significantly improve visibility by displaying AR digital signage on an AR carpet on a road differently from the conventional method of mapping and displaying AR digital signage on a building on a floor-by-floor basis. Also, by mapping and displaying a plurality of pieces of AR digital signage and an AR carpet on a road in a driving image rather than on a building in order to secure the visibility of advertisement signage while the vehicle is about to or is expected to enter the building, it is possible to help safety driving because visual information is provided on a road ahead without the need for the driver to change his or her gaze to the building. Also, when the appearance of an obstacle is detected in the driving direction of the vehicle, the driver may reliably recognize the obstacle and drive safely by stopping the display of the AR carpet and moving and mapping the image of the floorwise AR digital signage to another display area in the driving video or increasing the transparency of the AR digital signage and mapping the AR digital signage.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the processor or the controller. Therefore, it should also be understood that the above-described embodiments are not limited by any of the details of the foregoing description, unless otherwise specified, but rather should be construed broadly within its scope as defined in the appended claims,

## Claims

1. A display device (200) linked to a vehicle (100), the display device (200) comprising:
a communication unit (2710) configured to communicate with a system (800) for providing a digital signage platform communicating with a server (900);
a display unit (2720) configured to display an image of the vehicle acquired through a vision sensor of the vehicle during the driving of the vehicle; and
a control unit (2730) configured to control the communication unit to receive sensing data of the vehicle and transmit a request for point of interest (POI) information associated with the sensing data to the system,
wherein the control unit (2730) is configured to:
receive map information including POI information and floor number information from a server (900) and recognize spatial coordinates of a building including at least a plurality of pieces of POI information from the map information;
acquire floor number information for each of the plurality of the pieces of POI information from the map information;
calculate a reference point of the building for displaying content information related to the plurality of pieces of POI information based on sensing data of the vehicle, the spatial coordinates, and floor number information for the each of the plurality of the pieces of POI information;
transmit a first request for generating augmented reality (AR) digital signage in a first display area determined based on the calculated reference point, the AR digital signage corresponding to content information related to the plurality of pieces of POI information on a floor-by-floor basis using the sensing data of the vehicle, the spatial coordinates of the building, and the floor number information;
receive a result of the first request and display the AR digital signage on a floor-by-floor basis in the first display area, wherein the first display area is side of the building in the acquired image, wherein the side of the building is a front side or a lateral side of the building,
transmit a second request for generating an AR carpet for guiding entry into the building in the acquired image on the basis of driving-related information included in the sensing data of the vehicle;
receive a result of the second request, and
display an AR carpet corresponding to the result of the second request on a road in the acquired image as a second display area and map at least some images of floorwise AR digital signage corresponding to the result of the first request to the second display area when the vehicle satisfies conditions of determining that the vehicle is expected to enter the building,
wherein the conditions are based on at least one of a current location of the vehicle, driving-related information of the vehicle, characteristics of the building, a correlation between the building and a destination, and user preference,
wherein the first request includes a command to extract floorwise representative POI information, and
the control unit is configured to display an image of the AR digital signage matched to the floorwise representative POI information on the AR carpet in the floor order.

2. The display device (200) of claim **1,** wherein the control unit (2730) is configured to:
map and display, on a floor-by-floor basis, the images of the floorwise AR digital signage corresponding to the result of the first request on the building in the acquired image; and
display the AR carpet as a guidance route in the image in response to the vehicle approaching within the certain range from the building and a driving speed less than or equal to a threshold range.

3. The display device (200) of claim 2, wherein the control unit (2730) is configured to:
cause the number of images of the AR digital signage displayed on the building in the driving image on a floor-by-floor basis to be gradually reduced as the vehicle approaches the building; and
transmit a rendering request to move the images of the floorwise AR digital signage from the building to the AR carpet at a certain time after the AR carpet is displayed.

4. The display device (200) of claim 1, wherein when a distance between the vehicle and the building including the destination decreases, the control unit (2730) is configured to
vary the second display area of the AR carpet; and
map an image of AR signage of a layer corresponding to the destination and images of AR signage of other floors to the varied display area in the manner that the image corresponding to the destination is visually distinct from the other images.

5. The display device (200) of claim 1, wherein while an obstacle is detected in the second display area of the AR carpet in the acquired image, the control unit (2730) is configured to vary the transparency of the AR carpet and the images of the floorwise digital signage and then display the acquired image to facilitate a driver to recognize the detected obstacle.

6. The display device (200) of claim 1, wherein when an obstacle is detected in the second display area of the AR carpet in the acquired image, the control unit (2730) is configured to stop the displaying of the AR carpet and map and display the images of the floorwise AR digital signage to another display area in the acquired image to facilitate a driver to recognize the detected obstacle.

7. An operating method of a display device (200) linked to a vehicle (100), the display device (200) comprising operations of:
performing (1710) a connection to a system (800) for providing a digital signage platform communicating with a server (900) in response to a user input;
receiving (1710) sensing data of the vehicle and transmitting a request for point of interest (POI) information associated with the sensing data of the vehicle to the system;
receiving map information
including POI information and floor number information from a server (900) and recognizing spatial coordinates of a building including at least a plurality of pieces of POI information from the map information;
acquiring floor number information for each of the plurality of the pieces of POI information from the map information;
calculating a reference point of the building for displaying content information related to the plurality of pieces of POI information based on sensing data of the vehicle, the spatial coordinates, and floor number information for the each of the plurality of the pieces of POI information;
transmitting (1730) a first request for generating augmented reality (AR) digital signage in a first display area determined based on the calculated reference point, the AR digital signage corresponding to content information related to the plurality of pieces of POI information on a floor-by-floor basis using the sensing data of the vehicle, the spatial coordinates of the building, and the floor number information;
receiving a result of the first request and display the AR digital signage on a floor-by-floor basis in the first display area, wherein the first display area is a side of the building in the acquired image, wherein the side of the building is front side or a lateral side of the building;
transmitting (1740) a second request for generating an AR carpet for pointing entry into the building in the acquired image on the basis of driving-related information included in the sensing data of the vehicle;
receiving (1750) a result of the second request;
displaying (1760) an AR carpet corresponding to the result of the second request on a road in the acquired image as a second display area and mapping at least a portion of floorwise AR digital signage corresponding to the result of the first request to the second display area when the vehicle satisfies conditions of determining that the vehicle is expected to enter the building, wherein the conditions are based on at least one of a current location of the vehicle, driving-related information of the vehicle, characteristics of the building, a correlation between the building and a destination, and user preference; and
displaying an image of the AR digital signage matched to the floorwise representative POI information on the AR carpet in the floor order,
wherein the first request includes a command to extract floorwise representative POI information.

## Patentansprüche

1. Anzeigevorrichtung (200), die mit einem Fahrzeug (100) verbunden ist, wobei die Anzeigevorrichtung (200) aufweist:
eine Kommunikationseinheit (2710), die konfiguriert ist, mit einem System (800) zum Bereitstellen einer Digitalbeschilderungsplattform zu kommunizieren, das mit einem Server (900) kommuniziert;
eine Anzeigeeinheit (2720), die konfiguriert ist, ein Bild des Fahrzeugs anzuzeigen, das während der Fahrt des Fahrzeugs über einen Sichtsensor des Fahrzeugs erfasst wird; und eine Steuereinheit (2730), die konfiguriert ist, die Kommunikationseinheit zu steuern, um Erfassungsdaten des Fahrzeugs zu empfangen und eine Anforderung nach Sehenswürdigkeits- (POI) Informationen, die mit den Erfassungsdaten assoziiert sind, an das System zu senden,
wobei die Steuereinheit (2730) konfiguriert ist, um:
Karteninformationen, einschließlich POI-Informationen und Etagennummerninformationen, von einem Server (900) zu empfangen und räumliche Koordinaten eines Gebäudes, einschließlich mindestens mehrerer Teile von POI-Informationen, aus den Karteninformationen zu erkennen;
Etagennummerninformationen für jeden der mehreren Teile von POI-Informationen aus den Karteninformationen zu erfassen;
einen Referenzpunkt des Gebäudes zur Anzeige von Inhaltsinformationen, die sich auf die mehreren Teile der POI-Informationen beziehen, basierend auf Erfassungsdaten des Fahrzeugs, den räumlichen Koordinaten und den Etagennummerninformationen für jede der mehreren Teile der POI-Informationen zu berechnen;
eine erste Anforderung zu senden, unter Verwendung der Erfassungsdaten des Fahrzeugs, der räumlichen Koordinaten des Gebäudes und der Etagennummern eine erweiterte Realitäts- (AR) Digitalbeschilderung in einem ersten Anzeigebereich zu erzeugen, der basierend auf dem berechneten Referenzpunkt bestimmt wird, wobei die AR-Digitalbeschilderung Inhaltsinformationen entspricht, die sich auf die mehreren Teile der POI-Informationen auf einer etagenweisen Grundlage beziehen;
ein Ergebnis der ersten Anforderung zu empfangen und die AR-Digitalbeschilderung auf einer etagenweisen Grundlage in dem ersten Anzeigebereich anzuzeigen, wobei der erste Anzeigebereich eine Seite des Gebäudes in dem erfassten Bild ist, wobei die Seite des Gebäudes eine Vorderseite oder eine laterale Seite des Gebäudes ist;
eine zweite Anforderung zu senden, einen AR-Teppich zum Führen der Einfahrt in das Gebäude in dem erfassten Bild auf der Grundlage von fahrbezogenen Informationen zu erzeugen, die in den Erfassungsdaten des Fahrzeugs enthalten sind;
ein Ergebnis der zweiten Anforderung zu empfangen und
einen AR-Teppich entsprechend dem Ergebnis der zweiten Anforderung auf einer Straße im erfassten Bild als zweiten Anzeigebereich anzuzeigen und mindestens einige Bilder einer etagenweisen AR-Digitalbeschilderung entsprechend dem Ergebnis der ersten Anforderung auf den zweiten Anzeigebereich abzubilden, wenn das Fahrzeug Bedingungen erfüllt, die bestimmen, dass das Fahrzeug voraussichtlich in das Gebäude einfahren wird,
wobei die Bedingungen mindestens auf einem aktuellen Standort des Fahrzeugs, fahrbezogenen Informationen des Fahrzeugs, Eigenschaften des Gebäudes, einer Korrelation zwischen dem Gebäude und einem Ziel und einer Benutzervorliebe basieren,
wobei die erste Anforderung einen Befehl enthält, etagenweise repräsentative POI-Informationen zu extrahieren, und
die Steuereinheit konfiguriert ist, ein Bild der AR-Digitalbeschilderung, das auf die etagenweisen repräsentativen POI-Informationen abgestimmt ist, auf dem AR-Teppich in der Etagenreihenfolge anzuzeigen.

2. Anzeigevorrichtung (200) nach Anspruch 1, wobei die Steuereinheit (2730) konfiguriert ist, um:
auf einer etagenweisen Grundlage die Bilder der etagenweisen AR-Digitalbeschilderung, die dem Ergebnis der ersten Anforderung entsprechen, auf dem Gebäude im erfassten Bild abzubilden und anzuzeigen; und
den AR-Teppich als Wegführung im Bild als Reaktion darauf anzuzeigen, dass sich das Fahrzeug innerhalb eines bestimmten Abstands vom Gebäude nähert und die Fahrgeschwindigkeit kleiner oder gleich einem Schwellenwertbereichs ist.

3. Anzeigevorrichtung (200) nach Anspruch 2, wobei die Steuereinheit (2730) konfiguriert ist, um:
zu bewirken, dass die Anzahl der Bilder der AR-Digitalbeschilderung, die auf dem Gebäude im Fahrbild auf einer etagenweisen Grundlage angezeigt werden, schrittweise verringert wird, wenn sich das Fahrzeug dem Gebäude nähert; und
eine Rendering-Anforderung zu senden, die Bilder der etagenweisen AR-Digitalbeschilderung vom Gebäude zum AR-Teppich zu einem bestimmten Zeitpunkt zu bewegen, nachdem der AR-Teppich angezeigt wird.

4. Anzeigevorrichtung (200) nach Anspruch 1, wobei, wenn der Abstand zwischen dem Fahrzeug und dem Gebäude, das das Ziel enthält, abnimmt, die Steuereinheit (2730) konfiguriert ist, den zweiten Anzeigebereich des AR-Teppichs zu variieren; und
ein Bild der AR-Beschilderung einer dem Ziel entsprechenden Schicht sowie Bilder der AR-Beschilderung anderer Etagen auf den variierten Anzeigebereich in einer Weise abzubilden, dass sich das dem Ziel entsprechende Bild visuell von den anderen Bildern unterscheidet.

5. Anzeigevorrichtung (200) nach Anspruch 1, wobei, während ein Hindernis im zweiten Anzeigebereich des AR-Teppichs im erfassten Bild entdeckt wird, die Steuereinheit (2730) konfiguriert ist, die Transparenz des AR-Teppichs und der Bilder der etagenweisen Digitalbeschilderung zu variieren und danach das erfasste Bild anzuzeigen, um es einem Fahrer zu erleichtern, das entdeckte Hindernis zu erkennen.

6. Anzeigevorrichtung (200) nach Anspruch 1, wobei, wenn ein Hindernis im zweiten Anzeigebereich des AR-Teppichs im erfassten Bild entdeckt wird, die Steuereinheit (2730) konfiguriert ist, das Anzeigen des AR-Teppichs zu stoppen, und die Bilder der etagenweisen AR-Digitalbeschilderung in einem anderen Anzeigebereich im erfassten Bild abzubilden und anzuzeigen, um es einem Fahrer zu erleichtern, das entdeckte Hindernis zu erkennen.

7. Betriebsverfahren einer Anzeigevorrichtung (200), die mit einem Fahrzeug (100) verbunden ist, wobei die Anzeigevorrichtung (200) Operationen aufweist zum:
Durchführen (1710) einer Verbindung mit einem System (800) zum Bereitstellen einer Digitalbeschilderungsplattform zu kommunizieren, das mit einem Server (900) kommuniziert, als Reaktion auf eine Benutzereingabe;
Empfangen (1710) von Erfassungsdaten des Fahrzeugs und Senden einer Anforderung nach Sehenswürdigkeits- (POI) Informationen, die mit den Erfassungsdaten des Fahrzeugs assoziiert sind, an das System;
Empfangen von Karteninformationen, einschließlich POI-Informationen und Etagennummern, von einem Server (900) und Erkennen räumlicher Koordinaten eines Gebäudes, einschließlich mindestens mehrerer Teile von POI-Informationen, aus den Karteninformationen;
Erfassen von Etagennummerninformationen für jeden der mehreren Teile der POI-Informationen aus den Karteninformationen;
Berechnen eines Referenzpunkts des Gebäudes zum Anzeigen von Inhaltsinformationen, die sich auf die mehreren Teile der POI-Informationen beziehen, basierend auf Erfassungsdaten des Fahrzeugs, den räumlichen Koordinaten und den Etagennummerninformationen für jeden der mehreren Teile der POI-Informationen;
Senden (1730) einer ersten Anforderung, unter Verwendung der Erfassungsdaten des Fahrzeugs, der räumlichen Koordinaten des Gebäudes und der Etagennummern eine erweiterte Realitäts- (AR) Digitalbeschilderung in einem ersten Anzeigebereich zu erzeugen, der basierend auf dem berechneten Referenzpunkt bestimmt wird, wobei die AR-Digitalbeschilderung Inhaltsinformationen entspricht, die sich auf die mehreren Teile der POI-Informationen auf einer etagenweisen Grundlage beziehen;
Empfangen eines Ergebnisses der ersten Anforderung und Anzeigen der AR-Digitalbeschilderung auf einer etagenweisen Grundlage in einem ersten Anzeigebereich, wobei der erste Anzeigebereich eine Seite des Gebäudes in dem erfassten Bild ist, wobei die Seite des Gebäudes eine Vorderseite oder eine laterale Seite des Gebäudes ist;
Senden (1740) einer zweiten Anforderung, einen AR-Teppich zum Zeigen der Einfahrt in das Gebäude in dem erfassten Bild auf der Grundlage von fahrbezogenen Informationen zu erzeugen, die in den Erfassungsdaten des Fahrzeugs enthalten sind;
Empfangen (1750) eines Ergebnisses der zweiten Anforderung;
Anzeigen (1760) eines AR-Teppichs, der dem Ergebnis der zweiten Anforderung entspricht, auf einer Straße im erfassten Bild als zweiten Anzeigebereich und Abbilden mindestens eines Teils der etagenweisen AR-Digitalbeschilderung, die dem Ergebnis der ersten Anforderung entspricht, auf den zweiten Anzeigebereich, wenn das Fahrzeug Bedingungen erfüllt, die bestimmen, dass das Fahrzeug voraussichtlich in das Gebäude einfahren wird, wobei die Bedingungen mindestens auf einem aktuellen Standort des Fahrzeugs, fahrbezogenen Informationen des Fahrzeugs, Eigenschaften des Gebäudes, einer Korrelation zwischen dem Gebäude und einem Ziel und einer Benutzervorliebe basieren; und
Anzeigen eines Bildes der AR-Digitalbeschilderung, das auf die etagenweisen repräsentativen POI-Informationen abgestimmt ist, auf dem AR-Teppich in der Etagenreihenfolge,
wobei die erste Anforderung einen Befehl enthält, etagenweise repräsentative POI-Informationen zu extrahieren.

## Revendications

1. Dispositif d'affichage (200) relié à un véhicule (100), ledit dispositif d'affichage (200) comprenant :
une unité de communication (2710) configurée pour communiquer avec un système (800) afin de présenter une plateforme de signalisation numérique communiquant avec un serveur (900) ;
une unité d'affichage (2720) configurée pour afficher une image du véhicule acquise par un capteur de vision du véhicule en cours de conduite ; et
une unité de commande (2730) configurée pour commander l'unité de communication afin de recevoir des données de détection du véhicule et transmettre au système une demande d'informations sur des lieux d'intérêt (POI) associées aux données de détection, où l'unité de commande (2730) est configurée pour :
recevoir des informations cartographiques comprenant des informations POI et des informations de nombre d'étages en provenance d'un serveur (900), et reconnaître les coordonnées spatiales d'un bâtiment comprenant au moins une pluralité d'éléments d'informations POI à partir des informations cartographiques ;
acquérir des informations de nombre d'étages pour chaque élément de la pluralité d'éléments d'informations POI à partir des informations cartographiques ;
calculer un point de référence du bâtiment pour afficher des informations de contenu relatives à la pluralité d'éléments d'informations POI sur la base de données de détection du véhicule, de coordonnées spatiales et d'informations de nombre d'étages pour chaque élément de la pluralité d'éléments d'informations POI ;
transmettre une première demande pour générer une signalisation numérique en réalité augmentée (RA) dans une première zone d'affichage déterminée sur la base du point de référence calculé, la signalisation numérique RA correspondant à des informations de contenu relatives à la pluralité d'éléments d'informations POI sur une base étage par étage au moyen des données de détection du véhicule, des coordonnées spatiales du bâtiment et des informations de nombre d'étages ;
recevoir un résultat de la première demande et afficher la signalisation numérique RA sur une base étage par étage dans la première zone d'affichage, la première zone d'affichage étant un côté du bâtiment dans l'image acquise, ledit côté de bâtiment étant une façade avant ou une façade latérale du bâtiment ;
transmettre une deuxième demande pour générer un tapis RA pour un guidage d'entrée dans le bâtiment dans l'image acquise sur la base d'informations relatives à la conduite comprises dans les données de détection du véhicule ;
recevoir un résultat de la deuxième demande, et
afficher un tapis RA correspondant au résultat de la deuxième demande sur une chaussée dans l'image acquise en tant que deuxième zone d'affichage et mapper au moins certaines images de signalisation numérique en RA par étage correspondant au résultat de la première demande avec la deuxième zone d'affichage si le véhicule satisfait à des conditions permettant de déterminer que le véhicule est susceptible d'entrer dans le bâtiment,
où les conditions sont basées sur au moins l'un des éléments suivants : une position actuelle du véhicule, des informations relatives à la conduite du véhicule, des caractéristiques du bâtiment, une corrélation entre le bâtiment et une destination, et des préférences d'utilisateur,
où la première demande comprend une instruction d'extraction d'informations POI représentatives par étage, et
l'unité de commande est configurée pour afficher une image de la signalisation numérique en RA correspondant aux informations POI représentatives par étage sur le tapis RA dans l'ordre des étages.

2. Dispositif d'affichage (200) selon la revendication 1, où l'unité de commande (2730) est configurée pour :
cartographier et afficher, sur une base étage par étage, les images de signalisation numérique en RA par étage correspondant au résultat de la première demande sur le bâtiment dans l'image acquise ; et
afficher le tapis RA en tant qu'itinéraire de guidage dans l'image en réaction à l'approche du véhicule à une certaine distance du bâtiment et à une vitesse de conduite inférieure ou égale à une plage seuil.

3. Dispositif d'affichage (200) selon la revendication 2, où l'unité de commande (2730) est configurée pour :
réduire progressivement le nombre d'images de signalisation numérique en RA affichées sur le bâtiment dans l'image de conduite, sur une base étage par étage, à mesure que le véhicule s'approche du bâtiment ; et
transmettre une demande de rendu pour déplacer les images de signalisation numérique en RA par étage du bâtiment vers le tapis RA à un moment défini consécutif à l'affichage du tapis RA.

4. Dispositif d'affichage (200) selon la revendication 1, où, lorsque la distance entre le véhicule et le bâtiment comprenant la destination diminue, l'unité de commande (2730) est configurée pour modifier la deuxième zone d'affichage du tapis RA ; et
mapper une image de signalisation RA d'une couche correspondant à la destination et des images de signalisation RA d'autres étages avec la zone d'affichage modifiée de sorte que l'image correspondant à la destination soit visuellement distincte des autres images.

5. Dispositif d'affichage (200) selon la revendication 1, où, si un obstacle est détecté dans la deuxième zone d'affichage du tapis RA dans l'image acquise, l'unité de commande (2730) est configurée pour modifier la transparence du tapis RA et les images de signalisation numérique par étage, puis pour afficher l'image acquise afin de faciliter la reconnaissance de l'obstacle détecté par le conducteur.

6. Dispositif d'affichage (200) selon la revendication 1, où, si un obstacle est détecté dans la deuxième zone d'affichage du tapis RA dans l'image acquise, l'unité de commande (2730) est configurée pour arrêter l'affichage du tapis RA et pour mapper et afficher les images de signalisation numérique RA par étage dans une autre zone d'affichage de l'image acquise afin de faciliter la reconnaissance de l'obstacle détecté par le conducteur.

7. Procédé de fonctionnement d'un dispositif d'affichage (200) relié à un véhicule (100), ledit dispositif d'affichage (200) comprenant les opérations suivantes :
établissement (1710) d'une connexion avec un système (800) afin de présenter une plateforme de signalisation numérique communiquant avec un serveur (900) en réaction à une entrée d'utilisateur ;
réception (1710) de données de détection du véhicule et transmission au système d'une demande d'informations sur des lieux d'intérêt (POI) associées aux données de détection du véhicule ;
réception d'informations cartographiques comprenant des informations POI et des informations de nombre d'étages en provenance d'un serveur (900), et reconnaissance des coordonnées spatiales d'un bâtiment comprenant au moins une pluralité d'éléments d'informations POI à partir des informations cartographiques ;
acquisition d'informations de nombre d'étages pour chaque élément de la pluralité d'éléments d'informations POI à partir des informations cartographiques ;
calcul d'un point de référence du bâtiment pour afficher des informations de contenu relatives à la pluralité d'éléments d'informations POI sur la base de données de détection du véhicule, de coordonnées spatiales et d'informations de nombre d'étages pour chaque élément de la pluralité d'éléments d'informations POI ;
transmission (1730) d'une première demande pour générer une signalisation numérique en réalité augmentée (RA) dans une première zone d'affichage déterminée sur la base du point de référence calculé, la signalisation numérique RA correspondant à des informations de contenu relatives à la pluralité d'éléments d'informations POI sur une base étage par étage au moyen des données de détection du véhicule, des coordonnées spatiales du bâtiment et des informations de nombre d'étages ;
réception d'un résultat de la première demande et affichage de la signalisation numérique RA sur une base étage par étage dans la première zone d'affichage, la première zone d'affichage étant un côté du bâtiment dans l'image acquise, ledit côté de bâtiment étant une façade avant ou une façade latérale du bâtiment ;
transmission (1740) d'une deuxième demande pour générer un tapis RA pour un guidage d'entrée dans le bâtiment dans l'image acquise sur la base d'informations relatives à la conduite comprises dans les données de détection du véhicule ;
réception (1750) d'un résultat de la deuxième demande, et
affichage (1760) d'un tapis RA correspondant au résultat de la deuxième demande sur une chaussée dans l'image acquise en tant que deuxième zone d'affichage et mappage au moins d'une partie de signalisation numérique en RA par étage correspondant au résultat de la première demande avec la deuxième zone d'affichage si le véhicule satisfait à des conditions permettant de déterminer que le véhicule est susceptible d'entrer dans le bâtiment ; où les conditions sont basées sur au moins l'un des éléments suivants : une position actuelle du véhicule, des informations relatives à la conduite du véhicule, des caractéristiques du bâtiment, une corrélation entre le bâtiment et une destination, et des préférences d'utilisateur,
où la première demande comprend une instruction d'informations POI représentatives par étage, et
affichage d'une image de la signalisation numérique en RA correspondant aux informations POI représentatives par étage sur le tapis RA dans l'ordre des étages,
où la première demande comprend une instruction d'extraction d'informations POI représentatives par étage.
